# EUROPEAN PATENT APPLICATION

(11) **EP 4 797 749 A1**
(43) Date of publication of application: **26.08.2026**
(21) Application number: 24900785.7
(22) Date of filing: 05.09.2024
(51) Int. Cl.: H04W 8/24, H04W 24/02, G06N 3/08

(54) **ARTIFICIAL INTELLIGENCE-BASED COMMUNICATION METHOD AND APPARATUS IN WIRELESS COMMUNICATION SYSTEM**

(30) Priority: 05.12.2023 KR 20230174808
(71) Applicant: Samsung Electronics Co., Ltd., Suwon-si, Gyeonggi-do 16677 (KR)
(72) Inventor: BAIK, Jungsuk, Suwon-si Gyeonggi-do 16677 (KR); KIM, Suhwook, Suwon-si Gyeonggi-do 16677 (KR); KIM, Wonjun, Suwon-si Gyeonggi-do 16677 (KR); HWANG, Byeonghun, Suwon-si Gyeonggi-do 16677 (KR)
(74) Representative: Gulde & Partner
(86) International application number: PCT/KR2024/013366
(87) International publication number: WO 2025/121597

(57) **Abstract**

A method for operation of a network entity, according to an embodiment of the present disclosure, comprises the steps of: receiving, from a user equipment, information indicating the capability of the user equipment, the information indicating the capability of the user equipment including information indicating a data type that may be processed by the user equipment; determining the data type on the basis of the information indicating the capability of the user equipment and a communication condition; and transmitting, to the user equipment, data type information indicating the determined data type.

## Description

### [Technical Field]

The disclosure relates to a communication method and a communication apparatus in a wireless communication system and, more particularly, to a technology for enabling a network entity (e.g., a base station, etc.) and a terminal to effectively perform communication by using an artificial intelligence model.

### [Background Art]

Considering the development of wireless communication from generation to generation, the technologies have been developed mainly for services targeting humans, such as voice calls, multimedia services, and data services. Following the commercialization of 5G (5th generation) communication systems, it is expected that the number of connected devices will exponentially grow. Increasingly, these will be connected to communication networks. Examples of connected things may include vehicles, robots, drones, home appliances, displays, smart sensors connected to various infrastructures, construction machines, and factory equipment. Mobile devices are expected to evolve in various form-factors, such as augmented reality glasses, virtual reality headsets, and hologram devices. In order to provide various services by connecting hundreds of billions of devices and things in the 6G (6th generation) era, there have been ongoing efforts to develop improved 6G communication systems. For these reasons, 6G communication systems are referred to as beyond-5G systems.

6G communication systems, which are expected to be commercialized around 2030, will have a peak data rate of tera (1,000 giga)-level bit per second (bps) and a radio latency less than 100µsec, and thus will be 50 times as fast as 5G communication systems and have the 1/10 radio latency thereof.

In order to accomplish such a high data rate and an ultra-low latency, it has been considered to implement 6G communication systems in a terahertz (THz) band (for example, 95 gigahertz (GHz) to 3THz bands). It is expected that, due to severer path loss and atmospheric absorption in the terahertz bands than those in mmWave bands introduced in 5G, technologies capable of securing the signal transmission distance (that is, coverage) will become more crucial. It is necessary to develop, as major technologies for securing the coverage, Radio Frequency (RF) elements, antennas, novel waveforms having a better coverage than Orthogonal Frequency Division Multiplexing (OFDM), beamforming and massive Multiple-input Multiple-Output (MIMO), Full Dimensional MIMO (FD-MIMO), array antennas, and multiantenna transmission technologies such as large-scale antennas. In addition, there has been ongoing discussion on new technologies for improving the coverage of terahertz-band signals, such as metamaterial-based lenses and antennas, Orbital Angular Momentum (OAM), and Reconfigurable Intelligent Surface (RIS).

Moreover, in order to improve the spectral efficiency and the overall network performances, the following technologies have been developed for 6G communication systems: a full-duplex technology for enabling an uplink transmission and a downlink transmission to simultaneously use the same frequency resource at the same time; a network technology for utilizing satellites, High-Altitude Platform Stations (HAPS), and the like in an integrated manner; an improved network structure for supporting mobile base stations and the like and enabling network operation optimization and automation and the like; a dynamic spectrum sharing technology via collision avoidance based on a prediction of spectrum usage; an use of Artificial Intelligence (AI) in wireless communication for improvement of overall network operation by utilizing AI from a designing phase for developing 6G and internalizing end-to-end AI support functions; and a next-generation distributed computing technology for overcoming the limit of UE computing ability through reachable superhigh-performance communication and computing resources (such as Mobile Edge Computing (MEC), clouds, and the like) over the network. In addition, through designing new protocols to be used in 6G communication systems, developing mechanisms for implementing a hardware-based security environment and safe use of data, and developing technologies for maintaining privacy, attempts to strengthen the connectivity between devices, optimize the network, promote softwarization of network entities, and increase the openness of wireless communications are continuing.

It is expected that research and development of 6G communication systems in hyper-connectivity, including person to machine (P2M) as well as machine to machine (M2M), will allow the next hyper-connected experience. Particularly, it is expected that services such as truly immersive eXtended Reality (XR), high-fidelity mobile hologram, and digital replica could be provided through 6G communication systems. In addition, services such as remote surgery for security and reliability enhancement, industrial automation, and emergency response will be provided through the 6G communication system such that the technologies could be applied in various fields such as industry, medical care, automobiles, and home appliances.

### [Disclosure of Invention]

### [Technical Problem]

An aspect of the disclosure is to provide a method and a device for reducing overheads due to use of an AI model in a communication system, such as 5G, 5G-Advanced, and 6G, and for improving communication performance between a network and a UE.

### [Solution to Problem]

A method performed by a network entity in a wireless communication system includes: receiving, from a user equipment (UE), information indicating a capability of the UE, the information indicating the capability of the UE including information indicating a data type processable by the UE; determining a data type, based on the information indicating the capability of the UE and a communication condition; and transmitting, to the UE, data type information indicating the determined data type.

A method performed by a user equipment (UE) in a wireless communication system includes: transmitting, to a network entity, information indicating a capability of the UE, the information indicating the capability of the UE including information indicating a data type processable by the UE; receiving data type information indicating a data type determined based on the information indicating the capability of the UE and a communication condition; generating an output value of an AI model, based on the determined data type, and transmitting the generated output value to the network entity.

### [Advantageous Effects of Invention]

A method and an apparatus according to an embodiment of the disclosure can provide an effective artificial intelligence model-based transmission and reception operation in a wireless communication system.

Specifically, a method and an apparatus according to an embodiment of the disclosure can perform an operation of quantizing an AI model or using a quantized AI model, thereby performing efficient data processing according to network communication conditions.

Advantageous effects obtainable from the disclosure are not limited to the above-mentioned effects, and other effects which are not mentioned herein may be clearly understood from the following description by those skilled in the art to which the disclosure pertains.

### [Brief Description of Drawings]

The features and advantages of an embodiment of the disclosure will be more apparent from the following description in conjunction with the accompanying drawings.
FIG. 1 illustrates a wireless communication system according to an embodiment of the disclosure.
FIG. 2 illustrates a structure of a UE according to an embodiment.
FIG. 3 illustrates a structure of a network entity according to an embodiment.
FIG. 4 illustrates an AI model-based communication method according to an embodiment of the disclosure.
FIG. 5 illustrates an AI model according to an embodiment of the disclosure.
FIG. 6 illustrates a communication method according to an embodiment of the disclosure.
FIG. 7 illustrates information indicating an AI model quantization capability of a UE according to an embodiment of the disclosure.
FIG. 8A and FIG. 8B illustrate information indicating an AI model-related capability of a UE according to an embodiment of the disclosure.
FIG. 9 illustrates AI model-related configuration information according to an embodiment of the disclosure.
FIG. 10 illustrates configuration information regarding reporting of a UE according to an embodiment of the disclosure.
FIG. 11 illustrates a communication method according to an embodiment of the disclosure.
FIG. 12 illustrates a communication method according to an embodiment of the disclosure.
FIG. 13 illustrates a communication method according to an embodiment of the disclosure.
FIG. 14 illustrates a communication method according to an embodiment of the disclosure.
FIG. 15 illustrates a communication method according to an embodiment of the disclosure.
FIG. 16 illustrates a communication method according to an embodiment of the disclosure.
FIG. 17 illustrates information regarding a data type change request according to an embodiment of the disclosure.
FIG. 18 illustrates a communication method according to an embodiment of the disclosure.
FIG. 19 illustrates a communication method according to an embodiment of the disclosure.
FIG. 20 illustrates a communication method according to an embodiment of the disclosure.
FIG. 21 illustrates a communication method according to an embodiment of the disclosure.
FIG. 22 illustrates an operation of a network entity according to an embodiment of the disclosure.
FIG. 23 illustrates an operation of a UE according to an embodiment of the disclosure.

### [Mode for the Invention]

Embodiments of the disclosure may resolve the above-mentioned problems and/or disadvantages and provide advantages as described below. An aspect of the disclosure may provide a network entity (or node) and a communication method thereof in a wireless communication system.

The terms used in the disclosure are used merely to describe particular embodiments, and may not be intended to limit the scope of other embodiments. A singular expression may include a plural expression unless they are definitely different in a context. The terms used herein, including technical and scientific terms, may have the same meaning as those commonly understood by a person skilled in the art to which the disclosure pertains. Such terms as those defined in a generally used dictionary may be interpreted to have the meanings equal to the contextual meanings in the relevant field of art, and are not to be interpreted to have ideal or excessively formal meanings unless clearly defined in the disclosure. In some cases, even the term defined in the disclosure should not be interpreted to exclude embodiments of the disclosure.

Hereinafter, various embodiments of the disclosure will be described based on an approach of hardware. However, various embodiments of the disclosure include a technology that uses both hardware and software, and thus the various embodiments of the disclosure may not exclude the perspective of software.

Furthermore, various embodiments of the disclosure will be described using terms employed in some communication standards (e.g., the 3rd generation partnership project (3GPP)), but they are for illustrative purposes only. Various embodiments of the disclosure may also be easily applied to other communication systems through modifications.

Hereinafter, various embodiments of the disclosure will be described.

The core of AI-based beam management is for a base station to perform synchronization signal and physical broadcast channel block (SSB) transmissions using only a subset of beams from the entire beam grid pattern. A UE may provide a reference signal received power (RSRP) value of a received SSB beam to the base station. The base station may perform beam prediction using RSRP values received from the UE as inputs to an AI model. The base station may predict an RSRP value corresponding to a non-transmitted beam through beam prediction. The base station may sweep beams corresponding to top k RSRPs among RSRP values of the entire beam grid obtained through beam prediction (k is a hyper-parameter related to beam management). The UE may report a beam corresponding to a greatest RSRP value among the k received beams to the base station.

In AI-based beam management, the base station may employ an AI model to perform beam prediction, using an RSRP value reported from the UE as an input. A case in which inference is performed by one entity may be referred to as "one-sided model inference." An input of an AI model of the base station may be an RSRP value reported by the UE.

To enhance performance of AI-based beam management (e.g., to reduce beam sweeping overhead or to improving beam prediction accuracy), utilizing only one-sided model inference makes it difficult to achieve a performance gain. In particular, since hardware-implementable complexity in a mobile communication system is limited, it is practically difficult to indefinitely increase the size of an AI model or the amount of processed data. Consequently, operating beam management with only a one-sided model presents limitations.

A method and a device according to an embodiment of the disclosure relate to a method and a device for performing beam management that adopt two-sided model inference to reduce overhead and to improve beam prediction accuracy, compared to beam management based on one-sided model inference.

Generally, a UE may use a raw value regarding reporting information and additional UE-oriented information. For example, signal-related information, such as an L1-RSRP, a received signal strength indicator (RSSI), and a reference signal received quality (RSRQ), UE-side beam information, such as an Rx beam shape/direction, an Rx beam angle, an Rx beam width, and an Rx beam boresight, UE position information, such as a UE location and a UE moving direction, and channel information, such as a historical CIR, SINRs, and CQIs, may be used. Since such information is available in the UE, performing UE-side model inference using the information may improve efficiency of beam management. In one-sided model inference based on a conventional NW-side model, since inference is performed only on an NW side, using UE-oriented information and raw data for AI inference impossible unless the UE reports all information. Therefore, using two-sided model inference in which inference is performed on both UE and NW sides is presented.

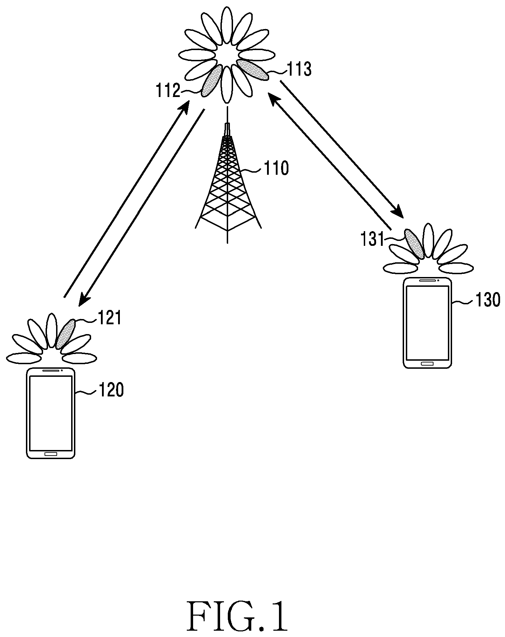

FIG. 1 illustrates a wireless communication system according to an embodiment of the disclosure.

FIG. 1 illustrates a base station 110, a first UE 120, and/or a second UE 130 as some of nodes using a radio channel in the wireless communication system. FIG. 1 illustrates only one base station, but this is merely an example. Other base stations identical or similar to the base station 110 may be further included in the wireless communication system of FIG. 1.

The base station 110 is a network infrastructure which provides radio access to the UEs 120 and 130. The base station 110 has coverage defined as a certain geographical area, based on a distance over which the base station 110 can transmit signals. In addition to the term "base station", the base station 110 may be referred to as an "access point (AP)", an "evolved Node B (eNB)", a "next generation Node B (gNB)", a "5th generation node (5G node)", a "wireless point", a "transmission/reception point (TRP)", or other terms having technical meanings equivalent thereto.

Each of the first UE 120 and the second UE 130 is a device used by a user, and may perform communication with the base station 110 via a radio channel. At least one of the UE 120 and the UE 130 may be operated without the user's involvement. For example, at least one of the first UE 120 and the second UE 130 may be a device which performs machine type communication (MTC), and may not be carried by the user. In addition to the term "terminal", each of the first UE 120 and the second UE 130 may be referred to as a "user equipment (UE)", a "mobile station", a "subscriber station", a "customer-premises equipment (CPE)", a "remote terminal", a "wireless terminal", an "electronic device", a "user device", or other terms having technical meanings equivalent thereto.

The base station 110, the first UE 120, and the second UE 130 may transmit and/or receive wireless signals in millimeter wave (mmWave) bands (e.g., 28GHz, 30GHz, 38GHz, and 60GHz). In this case, in order to improve channel gain, the base station 110, the first UE 120, and the second UE 130 may perform beamforming.

The beamforming may include transmission beamforming and/or reception beamforming. That is, the base station 110, the first UE 120, and the second UE 130 may assign directivity to a transmission signal or a reception signal. To assign directivity to a transmission signal, the base station 110 and/or the UEs 120 and 130 may select serving beams 112, 113, 121, and 131 through a beam search or beam management procedure. After the serving beams 112, 113, 121, and 131 are selected, subsequent communication may be performed through resources having a quasi co-located (QCL) relationship with resources used to transmit the serving beams 112, 113, 121, and 131.

Each of the base station 110, the first UE 120, and the second UE 130 of the disclosure may be a transmitting apparatus, a transmitting node, a receiving node, a receiving apparatus, and/or a receiving node. For example, the base station 110 may transmit a radio frequency (RF) signal to the first UE 120. The base station 110 may receive an RF signal from the first UE 120. As another example, the first UE 120 may transmit an RF signal to the base station 110 or the second UE 130. The first UE 120 may receive an RF signal from the base station 110 or the second UE 130.

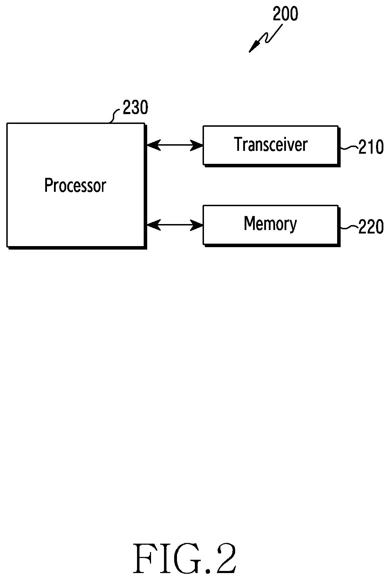

FIG. 2 illustrates a structure of a UE according to an embodiment.

Referring to FIG. 2, the UE 200 according to an embodiment may include a transceiver 210, a memory 220, and/or a processor 230. Although the UE 200 is described herein as including the transceiver 210, the memory 220, and/or the processor 230, this is merely an example. For example, the UE 200 may further include components other than the transceiver 210, the memory 220, and the processor 230.

According to an embodiment, each of the transceiver 210, the memory 220, and the processor 230 may be implemented as a separate chip. However, this is merely an example, and the transceiver 210, the memory 220, and/or the processor 230 may be implemented as a single chip.

According to an embodiment, the transceiver 210 may include at least one transmitter and/or at least one receiver. For example, the transceiver 210 may include an RF transmitter for amplifying and up-converting the frequency of a transmitted signal. The transceiver 210 may include an RF receiver for downconverting and low-noise amplifying the frequency of a received signal.

The components of the transceiver 210 set forth herein are merely an example, and the components of the transceiver 210 are not limited to the RF transmitter and the RF receiver. For example, the transceiver 210 may further include a coupler for ensuring isolation between the RF transmitter and the RF receiver.

According to an embodiment, the transceiver 210 may transmit or receive a signal to or from the processor 230. For example, the transceiver 210 may transmit or deliver an RF signal, received via a radio channel, to the processor 230. The transceiver 210 may receive an RF signal from the processor 230 or the processor 230 may deliver an RF signal to the transceiver 210.

According to an embodiment, the transceiver 210 may be referred to as a "UE transmitter" or a "UE receiver".

According to an embodiment, the transceiver 210 may transmit a signal to a base station (e.g., the base station 110 in FIG. 1) or a network entity (e.g., access and mobility management function (AMF) entity) or receive a signal from the base station or the network entity. In an embodiment, the transmitted or received signal may include a control signal or data.

According to an embodiment, the memory 220 may store programs and data necessary for the operations of the UE 200. For example, the memory 220 may be a non-transitory memory, and programs stored in the non-transitory memory may be organically coupled to hardware components (e.g., the processor 200 or the transceiver 230) of the UE 210. The memory 220 may store control information or data including a signal acquired by the UE 200. In an embodiment, the memory 220 may include a read-only memory (ROM), a random access memory (RAM), a hard disk, a CD-ROM, a DVD, or storage media.

According to an embodiment, the processor 230 may include one processor or multiple processors. For example, the processor 230 may include a communication processor. For example, the processor 230 may include a communication processor and/or an application processor.

According to an embodiment, the processor 230 may control a series of processes performed by the UE 200. For example, the transceiver 210 may receive a data signal including control information transmitted by the base station or the network entity. The processor 230 may process the received control signal and data signal.

The term "processor" of the disclosure may be replaced with various terms referring to components for executing or performing the operations of the UE 200. For example, the processor may be replaced with the term "controller" or "computing circuit".

The UE 200 of the disclosure may correspond to the first UE 120 and/or the second UE 130 in FIG. 1.

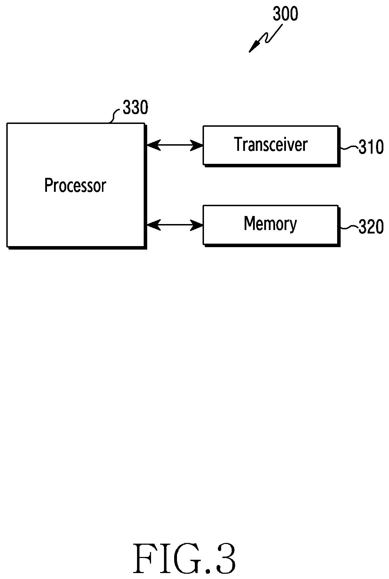

FIG. 3 illustrates a structure of a network entity according to an embodiment.

Referring to FIG. 3, the network entity 300 according to an embodiment may include a transceiver 310, a memory 320, and/or a processor 330. Although the network entity 300 is described herein as including the transceiver 310, the memory 320, and/or the processor 330, this is merely an example. For example, the network entity 300 may further include components other than the transceiver 310, the memory 320, and the processor 330. The network entity 300 may represent a base station or other network functions included in a core network.

According to an embodiment, each of the transceiver 310, the memory 320, and the processor 330 may be implemented as a separate chip. However, this is merely an example, and the transceiver 310, the memory 320, and/or the processor 330 may be implemented as a single chip.

According to an embodiment, the transceiver 310 may include at least one transmitter and/or at least one receiver. For example, the transceiver 310 may include an RF transmitter for amplifying and up-converting the frequency of a transmitted signal. The transceiver 310 may include an RF receiver for downconverting and low-noise amplifying the frequency of a received signal.

The components of the transceiver 310 set forth herein are merely an example, and the components of the transceiver 310 are not limited to the RF transmitter and the RF receiver. For example, the transceiver 310 may further include a coupler for ensuring isolation between the RF transmitter and the RF receiver.

According to an embodiment, the transceiver 310 may transmit or receive a signal to or from the processor 330. For example, the transceiver 310 may transmit or deliver an RF signal, received via a radio channel, to the processor 330. The transceiver 310 may receive an RF signal from the processor 330 or the processor 330 may deliver an RF signal to the transceiver 310.

According to an embodiment, the transceiver 310 may be referred to as a "network entity transmitter" or a "network entity receiver".

According to an embodiment, the transceiver 310 may transmit a signal to the UE 200 or receive a signal from the UE 200. In an embodiment, the transmitted or received signal may include a control signal or data.

According to an embodiment, the memory 320 may store programs and data necessary for the operations of the network entity 300. For example, the memory 320 may be a non-transitory memory, and programs stored in the non-transitory memory may be organically coupled to hardware components (e.g., the processor 300 or the transceiver 330) of the network entity 310. The memory 320 may store control information or data including a signal acquired by the network entity 300. In an embodiment, the memory 320 may include a read-only memory (ROM), a random access memory (RAM), a hard disk, a CD-ROM, a DVD, or storage media.

According to an embodiment, the processor 330 may include one processor or multiple processors. For example, the processor 330 may include a communication processor. For example, the processor 330 may include a communication processor and/or an application processor.

According to an embodiment, the processor 330 may control a series of processes performed by the network entity 300. For example, the transceiver 310 may receive a data signal including control information transmitted by the base station or the network entity. The processor 330 may process the received control signal and data signal.

The term "processor" of the disclosure may be replaced with various terms referring to components for executing or performing the operations of the network entity 300. For example, the processor may be replaced with the term "controller" or "computing circuit".

The network entity 300 of the disclosure may correspond to the base station 110 in FIG. 1.

The device described in FIG. 2 or FIG. 3 may correspond to a device of a transmitting node or receiving node. The UE or network entity according to an embodiment of the disclosure may be a transmitting node on the transmitting side and may be a receiving node on the receiving side.

In the following, the transmitting node and the receiving node nay refer to the UEs or the network entity described above in FIG. 1 to FIG. 3. In case of describing a downlink signal, the network entity will be the transmitting node and the UE will be the receiving node, and in case of describing an uplink signal, the UE will be the transmitting node and the network entity will be the receiving node.

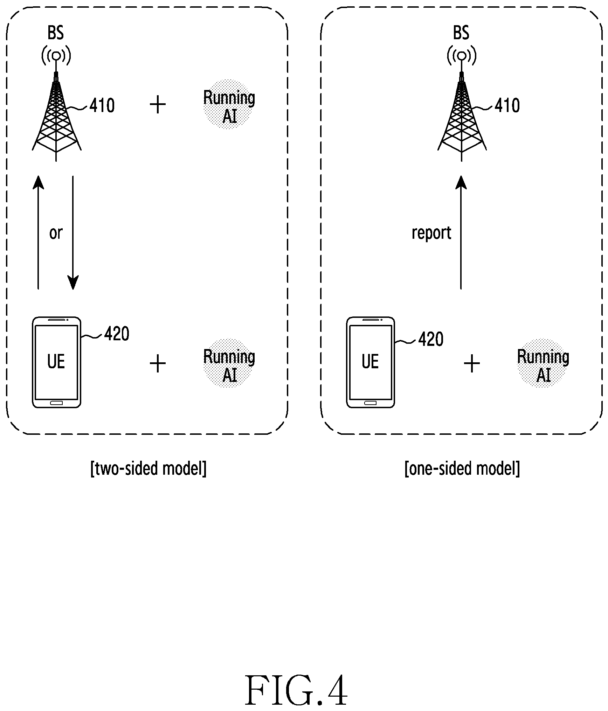

FIG. 4 is a diagram illustrating an AI model-based communication method according to an embodiment of the disclosure.

Referring to FIG. 4, the AI model-based communication method (hereinafter, referred to as "communication method") according to an embodiment of the disclosure may be classified as a one-sided model or a two-sided model depending on whether a network entity (e.g., a base station) or a UE uses an AI model. For example, when the base station (BS) 410 and the user equipment (UE) 420 each use an AI model in a transmission and reception process between the BS and the UE, the communication method may be referred to as a two-sided model. When only one side of the base station 410 and the UE 420 uses an AI model, the communication method is referred to as a one-sided model. When only the UE 420 uses an AI model (one-sided model), the UE 420 may transmit output information from the AI model to the base station 410. When both the base station 410 and the UE 420 use AI models (two-sided model), the base station 410 or the UE 420 may receive output information from an AI model of a counterpart, and may input the same to an AI model thereof. Communication methods according to embodiments of the disclosure may use an AI model in various cases, such as channel state indicator (CSI) prediction, CSI compression, and beam prediction, based on a one-sided model or a two-sided model.

Communication methods according to embodiments of the disclosure are technologies for improving efficiency of the foregoing AI-based communication method, and aspects of the technologies may be achieved based on quantization of an AI model.

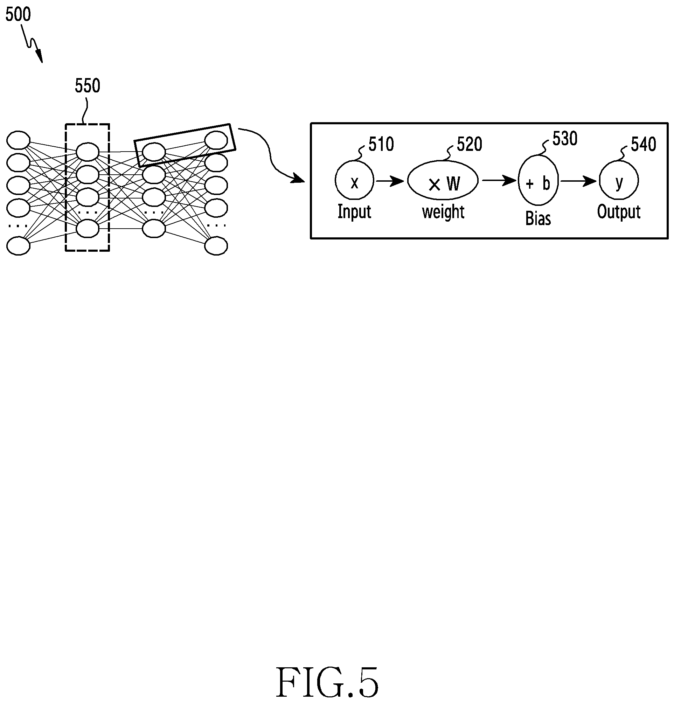

FIG. 5 is a diagram illustrating an AI model according to an embodiment of the disclosure.

FIG. 5 illustrates a structure of an AI model 500 according to an embodiment. The AI model 500 may obtain output information 540 by applying a weight 520 and/or a bias 530 to input information 510. Alternatively, the AI model 500 may obtain the output information 540 by applying an activation function to the input information 510. The input information 510 may be used to calculate the output information 540, based on the weight, the bias, or the activation function in a computation layer 550. The obtained output information may be used as input information in another layer to obtain other output information. The AI model 500 may include a plurality of layers that obtains output information using input information, and various weights, biases, or activation functions may be applied in each layer. The AI model 500 may be transferred or delivered between a transmitting node and a receiving node through structure information and weight information thereof.

In an AI model according to embodiments of the disclosure, a type of data processed during a procedure of computing input information to generate output information may be configured. For example, a data type processed by the AI model may be an integer type or a real number type. A data type of an integer type may be expressed as "int," and a data type of a real number type may be expressed as "float," "double," or "long double." The AI model may perform computation by applying a specific data type to a number, such as input information, weight information, bias information, and/or output information required for a computation process. A UE or a network entity may modify an AI model such that the AI model performs computation by representing data in a specific data type during a computation process. Such a modification of the AI model to perform computation with a specific data type may be referred to as "quantization of the AI model." When the network entity or the UE has an AI model quantization capability, the network entity or the UE may modify an AI model thereof to perform computation by applying a specific data type to the AI model. When the network entity or the UE has no AI model quantization capability, the network entity may receive a quantized model from the UE, or the UE may receive a quantized mode from the network entity, to operate the quantized AI model.

The data type of the integer type is a data type for representing an integer, and the data type of the real number type is a data type for representing a real number. There may be various expression methods for representing an integer or a real number. For example, the data type of the integer type or the real number type may be variously classified based on the number of bits used to represent the corresponding data type. When a first data type is a format for representing an integer using 16 bits, the first data type may be expressed as "INT16." When a second data type is a format for representing an integer using 8 bits, the second data type may be expressed as "INT8." When a third data type is a format for representing a real number using 32 bits, the third data type may be expressed as "FP32." When a fourth data type is a format for representing a real number using 16 bits, the fourth data type may be expressed as "FP16."

Embodiments of the disclosure are not limited to the foregoing kinds and formats of data types, and may be applied to various known data types.

The UE or the network entity may convert a type of data processed by the AI model, thereby reducing loads in a computation process of the AI model. For example, the AI model may have a lower computational load when processing a data type of "FP16" than when processing a data type of "FP32." However, accuracy of a predicted result value output from the AI model may be higher when the "FP32" type is applied.

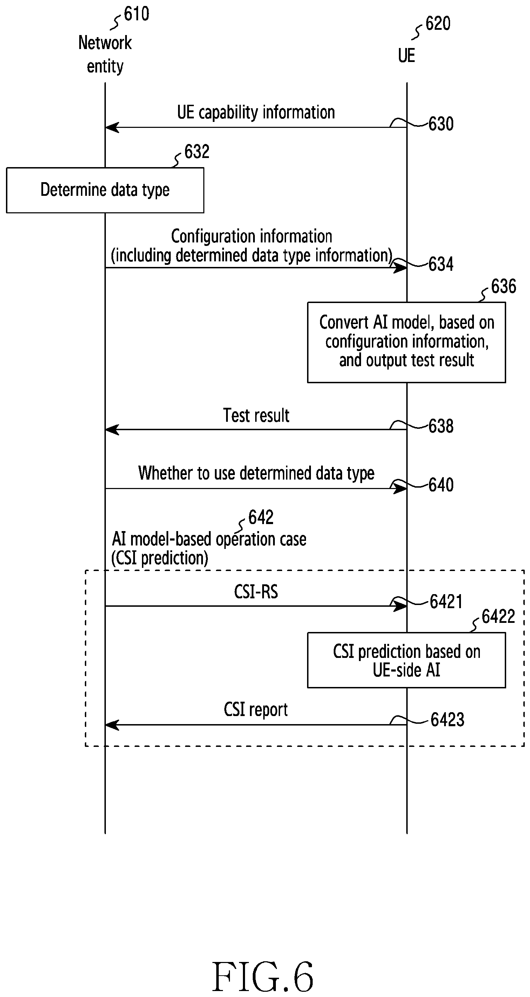

FIG. 6 is a diagram illustrating a communication method (hereinafter, "communication method") according to an embodiment of the disclosure.

FIG. 6 illustrates transmission and reception operations between a network entity 610 and a UE 620. The network entity 610 of FIG. 6 may correspond to the network entity of FIG. 3. The UE 620 of FIG. 6 may correspond to the UE of FIG. 2.

Hereinafter, operations for the communication method of FIG. 6 are described.

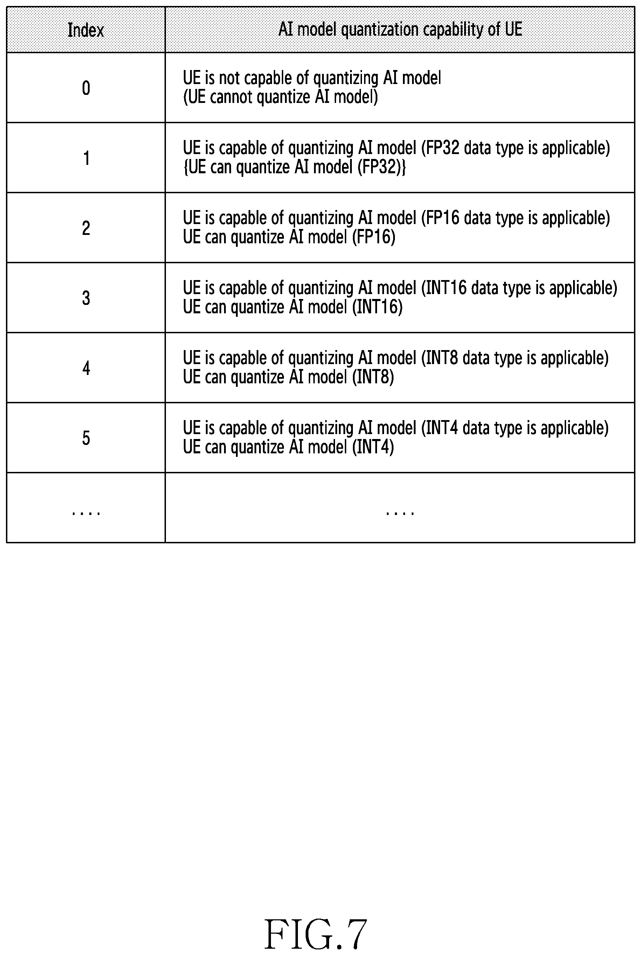

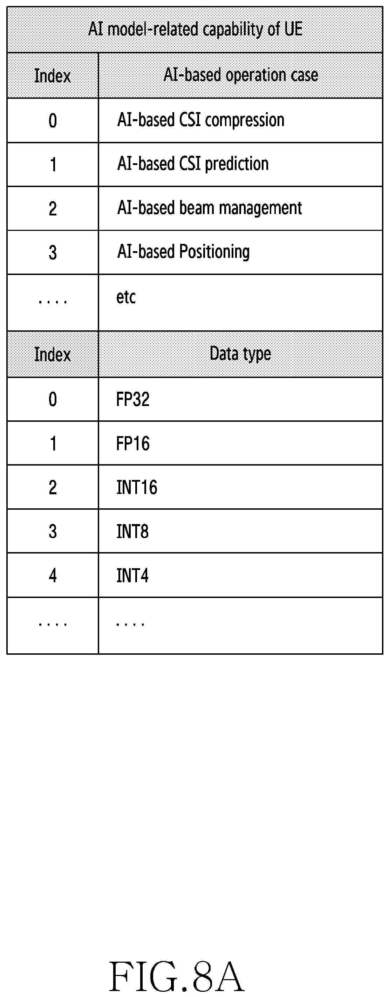

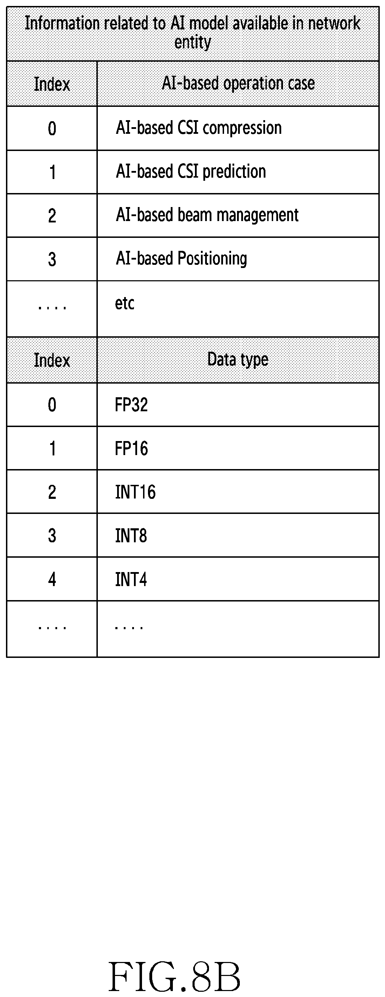

Operation 630 is an operation in which the network entity (e.g., a base station) 610 receives UE capability information indicating a capability of the UE from the UE. The UE capability information may include an AI model quantization capability of the UE in FIG. 7 and NW entity model data type information in FIG. 8, and may indicate at least one of whether the UE uses an AI model, whether the UE is capable of quantizing the AI model, or information about a data type that the AI model of the UE is capable of processing. Further, the UE capability information may indicate information regarding a data type that the UE is capable of processing by quantizing the AI model. The UE capability information includes information about the AI model for operation in a network entity that is owned by the UE. The information includes information about the AI model quantized for each use case (presence or absence of a model for each quantized type). In addition, the UE capability information may include information about model performance (e.g., accuracy) of each quantized model.

In an embodiment, the UE capability information may include information about an element that may affect performance of the AI model. For example, the UE capability information may include information about total capacity and available capacity of a storage, information about total capacity and available capacity of a memory used for computational operations, or the like.

The UE capability information regarding the AI model is illustrated in FIG. 7 to FIG. 8.

Operation 632 is an operation in which the network entity 610 determines a data type to be applied to computation of an AI model, based on the UE capability information and a communication condition. The network entity 610 may identify, through the UE capability information, whether the UE is capable of using the AI model, the information about the data type that the AI model of the UE is capable of processing, and/or whether the UE is capable of quantizing the AI model, thus determining an appropriate data type, based on the UE capability information. Further, the network entity 610 may determine a data type, based on the communication condition. The communication condition may include at least one of an accuracy condition, a latency condition, and/or a data throughput for information transmitted and received.

For example, according to the communication method according to the embodiment of the disclosure, an AI model of the network entity or the UE may apply a data type of FP32 to channel state indicator (CSI) prediction or CSI compression, based on a threshold value of an average data throughput (or total data throughput). Alternatively, in a communication condition of ultra-reliable low-latency communication (URLLC) (latency < 1ms, reliability < 10^(-5)), the AI model of the network entity or the UE may apply a data type of FP32 to channel state indicator (CSI) prediction or CSI compression. In addition, a specific data type may be applied to an operation of an AI model for various purposes, such as beam prediction and/or positioning.

Operation 634 is an operation in which the network entity 610 transmits configuration information to the UE 620. The configuration information may include information indicating the data type determined in operation 632. The configuration information may indicate a data type (or AI model-related configuration) applied to the AI model of the UE 620 and/or an output (or result) report data type of the AI model (or output report configuration of the AI model) of the UE 620. The output report data type of the AI model of the UE 620 may indicate a data type received by the network entity 610 from the UE 620. The UE 620 may convert (or quantize) the existing AI model to an AI model to which a specific data type is applicable, based on the received configuration information, and may perform inference using the converted (or quantized) AI model. Further, the UE 620 may transmit, to the network entity 610, information output as a specific data type from the AI model, based on the received configuration information. The configuration information may be information in which a data type is configured for each case (use case) based on an AI model. For example, the configuration information may indicate information about a data type applied to an AI model for each of CSI compression, CSI prediction, beam management, and positioning. That is, the configuration information may be information in which a quantization level is mapped to each case based on an AI model.

In an embodiment, when the quantization level is changed, that is, when the data type to be applied to the AI model is changed, the network entity 610 may indicate the changed data type to the UE 620 via a low-layer message. (The low-layer message may be in a form of a MAC CE or a DCI message.)

In an embodiment, the configuration information may indicate a predefined report format for a specific case in relation to reporting an output (or result) of the AI model. For example, the configuration information may indicate that, for a CSI prediction case, the UE performs reporting to the network entity using a predefined report format.

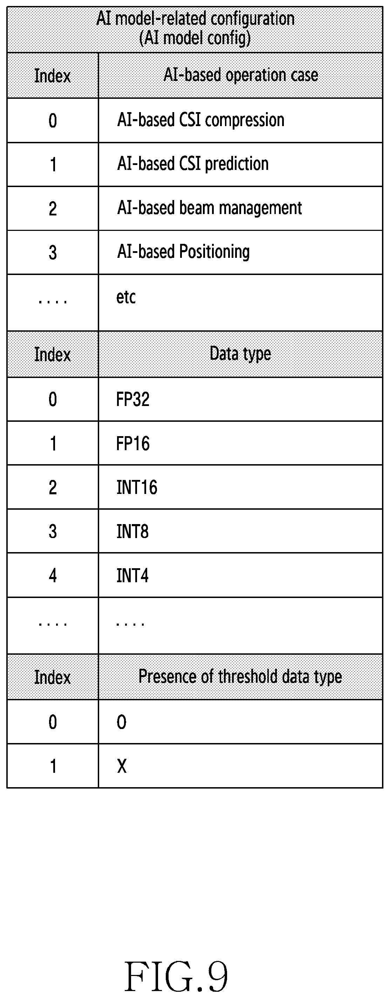

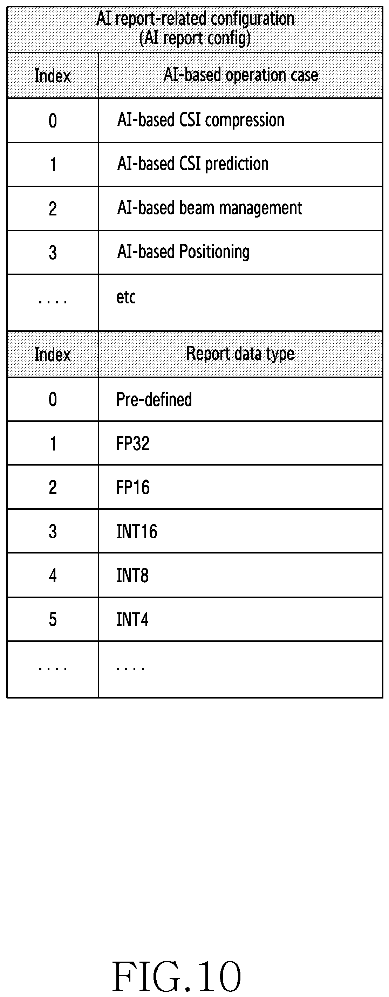

An exchange of the configuration information between the network entity 610 and the UE 620 may be performed based on an RRC message. The configuration information related to operation 634 may be illustrated in FIG. 9 and FIG. 10.

Operation 636 is an operation in which the UE 620 converts (or quantizes) the AI model, based on the received configuration information, and outputs a test result using the converted (or quantized) AI model. The UE 620 may convert (or quantify) the existing AI model of the UE to an AI model capable of processing a specific data type, based on the received configuration information. For example, when a data type processable by the existing AI model of the UE is FP32, the UE may convert the existing AI model to an AI model capable of processing a data type of INT16, based on the received configuration information (when the UE has a quantization capability).

Operation 638 may be an operation in which the UE 620 performs a test on the AI model converted in operation 636 and transmits a test result of information output from the converted AI model to the network entity 610. That is, the network entity 610 receives the test result of an output value of the AI model based on the information about the data type from the UE 620. The UE 620 may store a test data set for testing the AI model. The test result may be a message including an output metric of the AI model. The test result may include results of accuracy, computation speed, and reliability of predicted data.

Operation 640 is an operation in which the network entity 610 determines whether to continue to apply the configuration information (or data type), based on the test result received in operation 638, and transmits a determination result to the UE 620. The network entity 610 may determine whether the test result (e.g., accuracy, speed, or reliability) satisfies a reference condition, and may transmit, to the UE, indication information (e.g., a 1-bit message) (e.g., a DCI, MAC CE, or RRC message) indicating whether to use the configuration information, based on a determination result. The indication information indicating whether to use the configuration information may correspond to indication information indicating whether to use the converted AI model (or quantized AI model).

In an embodiment, when the test result fails to satisfy the reference condition, the network entity 610 may change the configuration information (or data type information) and transmit the same to the UE. The UE may convert the AI model, based on the changed configuration information, and may generate a test result again, based on an output of the converted AI model. The UE may transmit the test result to the network entity. That is, in the communication method according to the embodiment of the disclosure, when the test result of the converted AI model fails to satisfy the reference condition, the network entity may change the configuration information and transmit the changed configuration information to the UE, and the UE may test the AI model based on the changed configuration information and transmit a test result to the network entity. These operations may be repeatedly performed until a test result satisfying the reference is obtained.

Further, in an embodiment, when the test result fails to satisfy the reference condition, the network entity 610 may transmit information indicating that the test result fails to satisfy the reference condition to the UE, and the UE may use the AI model of the data type used previously.

In an embodiment, when the network entity 610 is able to directly transmit an AI model to the UE 620, operations 636 to 640 may be omitted.

Operation 642 is an example of prediction or management-related operations (e.g., a CSI prediction operation) based on the AI model.

Operation 6421 is an operation in which the network entity 610 transmits a CSI-reference signal (RS) to the UE 620.

Operation 6422 is an operation in which the UE 620 predicts a CSI using the AI model, based on the received CSI-RS.

Operation 6423 is an operation in which the UE 620 transmits a result predicted in operation 6422 to the network entity 610.

While operations 6421 to 6423 illustrate the CSI prediction operation, operations of various cases using an AI model, such as CSI compression, beam prediction, and/or positioning, may also be applied.

FIG. 7 illustrates information indicating an AI model quantization capability of a UE according to an embodiment of the disclosure.

The information illustrated in FIG. 7 may correspond to UE capability information associated with operation 630 of FIG. 6. The UE capability information may indicate at least one of whether the UE uses an AI model, whether the UE is capable of quantizing the AI model, or information about a data type the AI model of the UE is capable of processing. Further, the UE capability information may indicate information about a data type that the UE is capable of processing by quantizing the AI model.

Referring to FIG. 7, index 0 indicates that the UE has no AI model quantization capability. Index 1 indicates that the UE is capable of applying an FP32 data type by quantizing the AI model. Index 2 indicates that the UE is capable of applying an FP16 data type by quantizing the AI model. Index 3 indicates that the UE is capable of applying an INT32 data type by quantizing the AI model. Index 4 indicates that the UE is capable of applying an INT8 data type by quantizing the AI model. Index 5 indicates that the UE is capable of applying an INT4 data type by quantizing the AI model. As UE capabilities are further categorized, the number of indices and the number of information bits for indicating UE capabilities may increase.

In an embodiment, the UE capability information may indicate whether the UE is capable of using an AI model, whether the UE is capable of quantizing an AI model when the UE is capable of using the AI model, and/or information about a data type that is applicable in a quantized AI model when the UE is capable of quantizing the AI model.

FIG. 8A illustrates information indicating an AI model-related capability of a UE according to an embodiment of the disclosure.

The information illustrated in FIG. 8A may correspond to configuration information associated with operation 630 in FIG. 6.

Referring to FIG. 8A, UE capability information may include information about a data type corresponding to an AI-based operation case. AI-based operation cases may include CSI compression, CSI prediction, beam management, and/or positioning. Data type information may be mapped to each case. For example, the UE capability information may indicate that an AI model based on an FP16 data type is used in the AI-based CSI compression operation and an AI model based on an INT16 data type is used in an AI-based CSI prediction operation. In addition, the UE capability information may further include performance information regarding a data type corresponding to each case. For example, the UE capability information may include information indicating performance when a first data type corresponding to a first case is applied to an AI model. The information indicating the performance may include accuracy, loss, or the like. A network entity may determine a data type for a specific case, may quantize an AI model of the network entity, or may request an AI model from the UE, based on the UE capability information.

FIG. 8B illustrates information indicating an AI model-related capability of a UE according to an embodiment of the disclosure. Specifically, FIG. 8B may illustrate information about an AI model that the UE may transmit to a network entity when the network entity needs to request an AI model from the UE. That is, FIG. 8B may illustrate information related to an AI model available in the network entity. FIG. 8B may illustrate a data type of an AI model of the network entity.

The information illustrated in FIG. 8B may correspond to configuration information associated with operation 630 in FIG. 6. That is, UE capability information may include the information illustrated in FIG. 8B.

Referring to FIG. 8B, the UE capability information may include data type information corresponding to an AI-based operation case as the information about the AI model available in the network entity. AI-based operation cases may include CSI compression, CSI prediction, beam management, and/or positioning. Data type information may be mapped to each case. For example, the UE capability information may indicate that an AI model based on an FP16 data type is used in the AI-based CSI compression operation and an AI model based on an INT16 data type is used in an AI-based CSI prediction operation. In addition, the UE capability information may further include performance information regarding a data type corresponding to each case. For example, the UE capability information may include information indicating performance when a first data type corresponding to a first case is applied to an AI model. The information indicating the performance may include accuracy, loss, or the like. The network entity may determine a data type for a specific case, may quantize an AI model of the network entity, or may request an AI model from the UE, based on the AI model quantization capability of the UE of FIG. 7, the AI model-related capability of the UE of FIG. 8A, and/or the information about the AI model available in the network entity of FIG. 8B.

FIG. 9 illustrates AI model-related configuration information according to an embodiment of the disclosure.

The information illustrated in FIG. 9 may correspond to configuration information associated with operation 634 of FIG. 6.

The configuration information may include information indicating the data type determined in operation 632 of FIG. 6. The configuration information may include a data type (or AI model-related configuration) applied to an AI model of the UE.

Referring to FIG. 9, "AI-based operation case," "data type," and "threshold data type" are illustrated.

"AI-based operation case" may indicate a set of operations using the AI model, such as CSI compression, CSI prediction, beam management, and positioning per index. The configuration information may indicate a data type corresponding to each case. For example, the configuration information may indicate that an FP16 data type is applied to the AI model in a CSI compression operation and that an INT16 data type is applied to the AI model in a CSI prediction operation.

"Threshold data type" indicates whether a data type indicated by data type information is a threshold value. For example, the configuration information indicates that an INT8 data type is applied (index 3) to the AI model in the CSI compression operation (index 0) and "threshold data type" is "O" (index 0), the configuration information may indicate that any one data type among INT8, INT16, FP16, and/or FP32 may be applied to the AI model in the CSI compression operation. Alternatively, the configuration information may indicate that any one data type of INT8 and/or INT4 may be applied to the AI model in the CSI compression operation. That is, when "threshold data type" is "O," the data type indicated by the configuration information is a threshold value, and thus the configuration information may indicate that a data type corresponding to an index before or after an index of the indicated data type may be applied to the AI model. When a network entity directly transmits an AI model to the UE, the "threshold data type" field may be omitted. "Threshold data type" may be indicated by a 1-bit field. When "threshold data type" is "X," the UE may operate the UE AI model using a data type indicated by an index of "data type."

FIG. 10 illustrates configuration information regarding reporting of a UE according to an embodiment of the disclosure.

The information illustrated in FIG. 10 may correspond to configuration information associated with operation 634 of FIG. 6.

The configuration information may include an output (or result) report data type of an AI model (or output report configuration of the AI model) of the UE. That is, the configuration information may indicate data type information about a result output from the AI model of the UE. When an output value from the AI model of the UE is used as an input to an AI model of a network entity, the configuration information may configure data type information for a result output from the AI model of the UE, thereby configuring a data type for the input to the AI model of the network entity.

The output report data type of the AI model of the UE may indicate a data type that the network entity receives from the UE. The UE may transmit, to the network entity, information output as a specific data type from the AI model of the UE, based on the received configuration information. The configuration information may be information in which a data type is configured for each case (use case) based on an AI model. For example, the configuration information may indicate information about a data type applied to each AI model for CSI compression, CSI prediction, beam management, and/or positioning operations.

The configuration information may indicate a predefined report format for a specific case in relation to reporting an output (or result) of the AI model. For example, the configuration information may indicate that, for a CSI prediction case, the UE performs reporting to the network entity using a predefined report format.

AI-based operation cases and data types related to the UE capability information or configuration information described with reference to FIG. 7 to FIG. 10 are not limited to those illustrated in the drawings, and may include more cases and data types than those illustrated in the drawings.

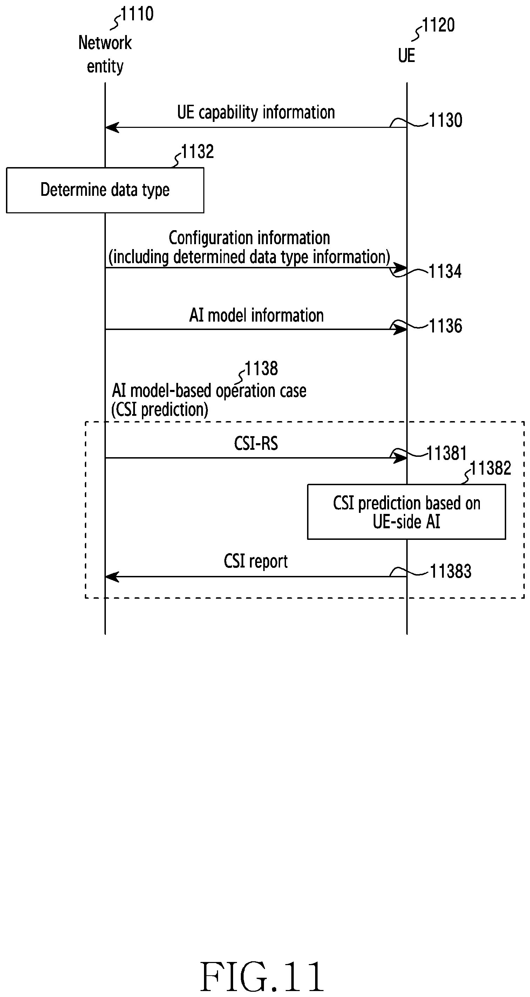

FIG. 11 is a diagram illustrating a communication method according to an embodiment of the disclosure.

The embodiment described with reference to FIG. 11 is characterized by an operation in which a network entity 1110 transmits an AI model to a UE 1120.

FIG. 11 illustrates transmission and reception operations between the network entity 1110 and the UE 1120. The network entity 1110 of FIG. 11 may correspond to the network entity of FIG. 3. The UE 1120 of FIG. 11 may correspond to the UE of FIG. 2.

Hereinafter, operations for the communication method of FIG. 11 are described.

The embodiment of FIG. 11 is an embodiment in which the network entity 1110 transmits an AI model to the UE 1120.

Operation 1130 is an operation in which the network entity (e.g., a base station) 1110 receives UE capability information indicating a capability of the UE from the UE. The UE capability information may indicate whether the UE uses an AI model, whether the UE is capable of quantizing the AI model, and/or information about a data type that the AI model of the UE is capable of processing. Further, the UE capability information may indicate information regarding a data type that the UE is capable of processing by quantizing the AI model. In addition, the UE capability information may include a data type and model performance information regarding an AI model that the UE is able to transmit to the network entity (see FIG. 8B).

The UE capability information regarding the AI model may be applied as exemplarily described with reference to FIG. 7 to FIG. 8.

Operation 1132 is an operation in which the network entity 1110 determines a data type to be applied to computation of an AI model, based on the UE capability information and a communication condition. Alternatively, in operation 1132, the network entity 1110 may determine an AI model of the UE, based on the UE capability information and the communication condition.

The network entity 1110 may identify, through the UE capability information, whether the UE is capable of using the AI model, the information about the data type that the AI model of the UE is capable of processing, whether the UE is capable of quantizing the AI model, and/or the data type and model performance information regarding the AI model that the UE is able to transmit to the network entity, thus determining an appropriate data type, based on the UE capability information. Further, the network entity 1110 may determine a data type, based on the communication condition. The communication condition may include an accuracy condition, a latency condition, and/or a data throughput condition for information transmitted and received. For example, according to the communication method according to the embodiment of the disclosure, an AI model of the network entity or the UE may apply a data type of FP32 to a specific AI-based operation case, based on a threshold value of an average data throughput (or total data throughput). Alternatively, in a communication condition of ultra-reliable low-latency communication (URLLC) (latency < 1ms, reliability < 10^(-5)), the AI model of the network entity or the UE may apply a data type of FP32 to channel state indicator (CSI) prediction (for example). In addition, a specific data type may be applied to an operation of an AI model for various purposes, such as beam prediction and/or positioning.

Operation 1134 is an operation in which the network entity 1110 transmits configuration information to the UE 1120. The configuration information may include information indicating the data type determined in operation 1132. The configuration information may indicate a data type (or AI model-related configuration) applied to the AI model of the UE 1120 and an output (or result) report data type of the AI model (or output report configuration of the AI model) of the UE 1120. The output report data type of the AI model of the UE 1120 may indicate a data type received by the network entity 1110 from the UE 1120. The UE 1120 may receive an AI model based on the received configuration information from the network entity 1810, and may perform inference using the received AI model. Further, the UE 1120 may transmit, to the network entity 1110, information output as a specific data type from the AI model, based on the received configuration information. The configuration information may be information in which a data type is configured for each case (use case) (e.g., CSI prediction) based on an AI model. For example, the configuration information may indicate information about a data type applied to an AI model for each of CSI compression, CSI prediction, beam management, and positioning. That is, the configuration information may be information in which a quantization level is mapped to each case based on an AI model.

An exchange of the configuration information between the network entity 1110 and the UE 1120 may be performed based on an RRC message. The configuration information related to operation 1134 may be illustrated in FIG. 9 and FIG. 10.

Operation 1136 is an operation in which the network entity 1110 transmits AI model information to the UE 1120. When the UE has no AI model or the UE is not capable of processing data of a specific data type by converting the existing AI model, the network entity 1110 may transmit an AI model capable of processing the data of the specific data type to the UE 1120. For example, when the network entity 1110 determines to apply an FP16 data type to an AI model in a CSI prediction operation, the network entity 1110 may transmit an AI model capable of processing the FP16 data type to the UE 1120. The network entity 1110 may transmit the AI model by transmitting structure information and weight information about the AI model capable of processing the FP16 data type to the UE 1120. The UE 1120 may generate and execute the AI model, based on the received structure information and weight information about the AI model.

In the embodiment of FIG. 11, since the network entity 1110 transmits the AI model to the UE 1120, a separate AI model performance test procedure may be omitted. However, when the AI model performance test procedure is performed, the UE may perform a test on the received AI model, and may transmit a test result of information output from the received AI model to the network entity. That is, the network entity may receive the performance test result of the AI model from the UE. The test result may include results of accuracy, computation speed, and reliability of predicted data.

The network entity may determine whether to continue to use the configuration information (or data type) or the AI model transmitted to the UE, based on the test result, and may transmit a determination result to the UE. The network entity may determine whether the test result (e.g., accuracy, speed, or reliability) satisfies a reference condition, and may transmit, to the UE, indication information (e.g., a 1-bit message) (e.g., a DCI, MAC CE, or RRC message) indicating whether to use the configuration information or the AI model, based on a determination result.

In an embodiment, when the test result fails to satisfy the reference condition, the network entity may change the configuration information (or data type information) and transmit another AI model to the UE. The UE may generate a test result, based on an output from the additionally received AI model, and this test result may be different from the previous test result. That is, in the communication method according to the embodiment of the disclosure, when the test result of the AI model received by the UE fails to satisfy the reference condition, the network entity may transmit another (or updated) AI model to the UE, and the UE may transmit a result of testing the AI model based on newly received AI model information to the network entity. These operations may be repeatedly performed until a test result satisfying the reference is obtained.

Operation 1138 is an example of prediction or management-related operations (e.g., a CSI prediction operation) based on the AI model.

Operation 11381 is an operation in which the network entity 1110 transmits a CSI-reference signal (RS) to the UE 1120.

Operation 11382 is an operation in which the UE 1120 predicts a CSI using the AI model, based on the received CSI-RS.

Operation 11383 is an operation in which the UE 1120 transmits a result predicted in operation 11382 to the network entity 1110.

While operations 11381 to 11383 illustrate the CSI prediction operation, operations of various cases, such as CSI compression, beam prediction, and/or positioning, may also be applied.

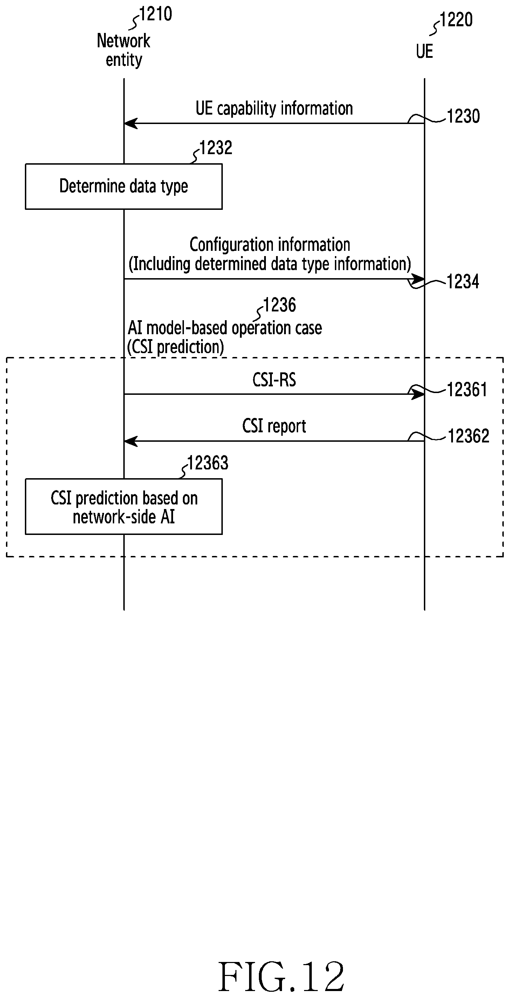

FIG. 12 is a diagram illustrating a communication method according to an embodiment of the disclosure.

The embodiment described with reference to FIG. 12 illustrates a case where a network entity 1210 is capable of quantizing an AI model. That is, the network entity 1210 may generate an AI model capable of processing data of a specific data type by converting an existing AI model.

FIG. 12 illustrates transmission and reception operations between a network entity 1210 and a UE 1220. The network entity 1210 of FIG. 12 may correspond to the network entity of FIG. 3. The UE 1220 of FIG. 12 may correspond to the UE of FIG. 2.

Hereinafter, operations for the communication method of FIG. 12 are described.

Operation 1230 is an operation in which the network entity (e.g., a base station) 1210 receives UE capability information indicating a capability of the UE from the UE. The UE capability information may indicate whether the UE uses an AI model, whether the UE is capable of quantizing the AI model, and/or information about a data type that the AI model of the UE is capable of processing. Further, the UE capability information may indicate information regarding a data type that the UE is capable of processing by quantizing the AI model. In addition, the UE capability information may include a data type and model performance information regarding an AI model that the UE is able to transmit to the network entity (see FIG. 8B).

In an embodiment, the UE capability information may include information about an element that may affect performance of the AI model. For example, the UE capability information may include information about total capacity and available capacity of a storage, information about total capacity and available capacity of a memory used for computational operations, or the like.

The UE capability information regarding the AI model is illustrated in FIG. 7 to FIG. 8.

Operation 1232 is an operation in which the network entity 1210 determines a data type to be applied to computation of an AI model, based on the UE capability information and a communication condition. The network entity 1210 may identify, through the UE capability information, whether the UE is capable of using the AI model, the information about the data type that the AI model of the UE is capable of processing, whether the UE is capable of quantizing the AI model, and/or the data type or performance information regarding the AI model that the UE is able to transmit to the network entity, thus determining an appropriate data type, based on the UE capability information. Further, the network entity 1210 may determine a data type, based on the communication condition. The communication condition may include an accuracy condition, a latency condition, and/or a data throughput condition for information transmitted and received. For example, according to the communication method according to the embodiment of the disclosure, an AI model of the network entity or the UE may apply a data type of FP32 to channel state indicator (CSI) prediction or CSI compression, based on a threshold value of an average data throughput (or total data throughput). Alternatively, in a communication condition of ultra-reliable low-latency communication (URLLC) (latency < 1ms, reliability < 10^(-5)), the AI model of the network entity or the UE may apply a data type of FP32 to channel state indicator (CSI) prediction or CSI compression. In addition, a specific data type may be applied to an operation of an AI model for various purposes, such as beam prediction and/or positioning.

Operation 1234 is an operation in which the network entity 1210 transmits configuration information to the UE 1220. The configuration information may include information indicating the data type determined in operation 1232. An exchange of the configuration information between the network entity 1210 and the UE 1220 may be performed based on an RRC message. The configuration information related to operation 1234 may be illustrated in FIG. 9 and FIG. 10.

Operation 1236 is an example of prediction or management-related operations (e.g., a CSI prediction operation) based on the AI model.

Operation 12361 is an operation in which the network entity 1210 transmits a CSI-reference signal (RS) to the UE 1220.

Operation 12362 is an operation in which the UE 1220 transmits information about the CSI-RS received in operation 12361 to the network entity 1210.

Operation 12363 is an operation in which the network entity 1210 predicts a CSI using the AI model of the network entity, based on the information received in operation 12362.

While operations 12361 to 12363 illustrate the CSI prediction operation, operations of various cases, such as CSI compression, beam prediction, and/or positioning, may also be applied.

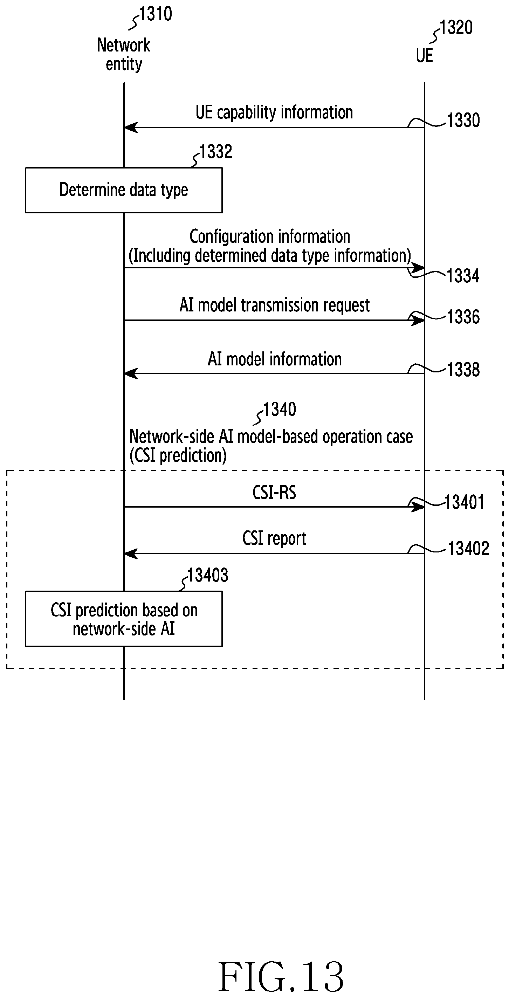

FIG. 13 is a diagram illustrating a communication method according to an embodiment of the disclosure.

The embodiment described with reference to FIG. 13 is an embodiment in which a network entity 1310 receives an AI model from a UE 1320. That is, the network entity 1310 may request the UE 1320 to transmit an AI model, may receive the requested AI model, and may perform inference through the AI model.

FIG. 13 illustrates transmission and reception operations between the network entity 1310 and the UE 1320. The network entity 1310 of FIG. 13 may correspond to the network entity of FIG. 3. The UE 1320 of FIG. 13 may correspond to the UE of FIG. 2.

Hereinafter, operations for the communication method of FIG. 13 are described.

Operation 1330 is an operation in which the network entity (e.g., a base station) 1310 receives UE capability information indicating a capability of the UE from the UE. The UE capability information may indicate whether the UE uses an AI model, whether the UE is capable of quantizing the AI model, and/or information about a data type that the AI model of the UE is capable of processing. Further, the UE capability information may indicate information regarding a data type that the UE is capable of processing by quantizing the AI model.

In an embodiment, the UE capability information may include information about an element that may affect performance of the AI model. For example, the UE capability information may include information about total capacity and available capacity of a storage, information about total capacity and available capacity of a memory used for computational operations, or the like.

The UE capability information regarding the AI model is illustrated in FIG. 7 to FIG. 8.

Operation 1332 is an operation in which the network entity 1310 determines a data type to be applied to computation of an AI model, based on the UE capability information and/or a communication condition. Alternatively, operation 1332 may be an operation in which the network entity 1310 determines an AI model to be requested from the UE, based on the UE capability information and/or the communication condition. The network entity 1310 may determine the AI model to be requested from the UE, based on the information described above with reference to FIG. 8B.

The network entity 1310 may identify, through the UE capability information, whether the UE is capable of using the AI model, the information about the data type that the AI model of the UE is capable of processing, and/or whether the UE is capable of quantizing the AI model, thus determining an appropriate data type (or an AI model capable of processing the corresponding data type), based on the UE capability information. Further, the network entity 1310 may determine an appropriate data type (or an AI model capable of processing the corresponding data type), based on the communication condition. The communication condition may include an accuracy condition, a latency condition, and/or a data throughput condition for information transmitted and received.

An AI model of the network entity or the UE may apply a data type of FP32 to channel state indicator prediction or CSI compression, based on a threshold value of an average data throughput (or total data throughput). Alternatively, in a communication condition of ultra-reliable low-latency communication (URLLC) (latency < 1ms, reliability < 10^(-5)), the AI model of the network entity or the UE may apply a data type of FP32 to channel state indicator (CSI) prediction or CIS compression. In addition, a specific data type may be applied to an operation of an AI model for various purposes, such as beam prediction and/or positioning.

Operation 1334 is an operation in which the network entity 1310 transmits configuration information to the UE 1320. The configuration information may include information indicating the data type (or AI model) determined in operation 1332. The configuration information may indicate a data type (or AI model-related configuration) applied to the AI model. The configuration information may be information in which a data type is configured for each case (use case) based on an AI model. For example, the configuration information may indicate information about a data type applied to an AI model for each of CSI compression, CSI prediction, beam management, and positioning. That is, the configuration information may be information in which a quantization level is mapped to each case based on an AI model.

Operation 1336 is an operation in which the network entity 1310 requests the UE 1320 to transmit the AI model determined in operation 1332. A request for transmission of the AI model may include a request for a plurality of AI models. For example, the network entity 1310 may request the UE to transmit a plurality of AI models corresponding to a plurality of cases (use cases).

Operation 1338 is an operation in which the network entity 1310 receives the AI model requested in operation 1336 from the UE 1320.

When the network entity has no AI model or the network entity is not capable of processing data of a specific data type by converting the existing AI model, the network entity 1310 may request and receive an AI model capable of processing the data of the specific data type from the UE 1320. For example, when the network entity 1310 determines to apply an FP16 data type to an AI model in a CSI prediction operation, the network entity 1310 may request an AI model capable of processing the FP16 data type from the UE 1320. The UE 1320 may transmit the AI model by transmitting structure information and weight information about the AI model capable of processing the FP16 data type to the network entity 1310. The network entity 1310 may generate and execute the AI model, based on the received structure information and weight information about the AI model.

In the embodiment of FIG. 13, since the network entity 1310 receives the AI model from the UE 1120, a separate AI model performance test procedure may be omitted. However, when the AI model performance test procedure is performed, the network entity may perform a test on the received AI model, and may generate a test result of information output from the received AI model. The test result may include results of accuracy, computation speed, and reliability of predicted data.

In an embodiment, the network entity 1310 may perform a test on the AI model received in operation 1338. The network entity 1310 may store a test data set for performing the test on the received AI model. The network entity 1310 may determine whether to continue to use the received AI model, based on a test result. The network entity 1310 may determine whether the test result (e.g., accuracy, speed, or reliability) satisfies a reference condition, and may transmit a request for transmission of another AI model to the UE when the test result does not satisfy the reference condition. In the communication method according to the embodiment of the disclosure, when the test result of the AI model received by the network entity fails to satisfy the reference condition, the network entity may transmit a request for transmission of another AI model to the UE, may receive another AI model from the UE, and may perform a test again. These operations may be repeatedly performed until a test result satisfying the reference is obtained.

Operation 1340 is an example of prediction or management-related operations (e.g., a CSI prediction operation) based on the AI model.

Operation 13401 is an operation in which the network entity 1310 transmits a CSI-reference signal (RS) to the UE 1320.

Operation 13402 is an operation in which the network entity 1310 receives a CSI report from the UE 1320.

Operation 13403 is an operation in which the network entity 1310 predicts a CSI using the AI model, based on CSI report information.

Operations 13401 to 13403 illustrate the CSI prediction operation, operations of various cases, such as CSI compression, beam prediction, and/or positioning, may also be applied.

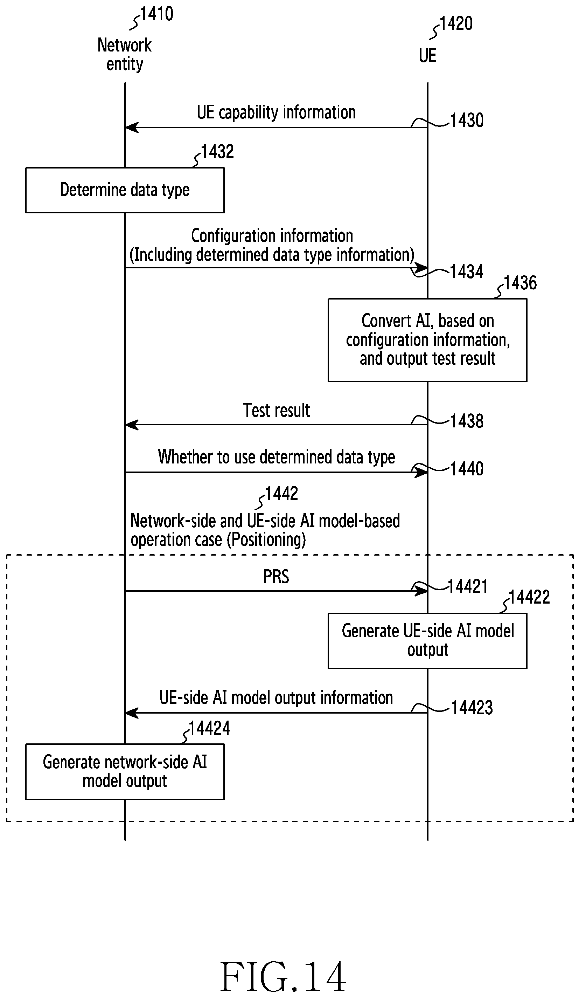

FIG. 14 is a diagram illustrating a communication method according to an embodiment of the disclosure.

FIG. 14 illustrates transmission and reception operations between a network entity 1410 and a UE 1420. The network entity 1410 of FIG. 14 may correspond to the network entity of FIG. 3. The UE 1420 of FIG. 14 may correspond to the UE of FIG. 2.

The embodiment of FIG. 14 may illustrate a case where both the network entity 1410 and the user terminal 1420 are capable of quantizing an AI model.

Hereinafter, operations for the communication method of FIG. 14 are described.

Operation 1430 is an operation in which the network entity (e.g., a base station) 1410 receives UE capability information indicating a capability of the UE from the UE 1420. The UE capability information may indicate whether the UE uses an AI model, whether the UE is capable of quantizing the AI model, and/or information about a data type that the AI model of the UE is capable of processing. Further, the UE capability information may indicate information regarding a data type that the UE is capable of processing by quantizing the AI model. In addition, the UE capability information may include a data type and model performance information regarding an AI model that the UE is able to transmit to the network entity (see FIG. 8B).

In an embodiment, the UE capability information may include information about an element that may affect performance of the AI model. For example, the UE capability information may include information about total capacity and available capacity of a storage, information about total capacity and available capacity of a memory used for computational operations, or the like.

The UE capability information regarding the AI model is illustrated in FIG. 7 to FIG. 8.

Operation 1432 is an operation in which the network entity 1410 determines a data type to be applied to computation of an AI model, based on the UE capability information and a communication condition. The network entity 1410 may identify, through the UE capability information, whether the UE is capable of using the AI model, the information about the data type that the AI model of the UE is capable of processing, and/or whether the UE is capable of quantizing the AI model, thus determining an appropriate data type, based on the UE capability information. Further, the network entity 1410 may determine a data type, based on the communication condition. The communication condition may include an accuracy condition, a latency condition, and/or a data throughput condition for information transmitted and received. For example, according to the communication method according to the embodiment of the disclosure, an AI model of the network entity or the UE may apply a data type of FP32 to channel state indicator (CSI) prediction or CSI compression, based on a threshold value of an average data throughput (or total data throughput). Alternatively, in a communication condition of ultra-reliable low-latency communication (URLLC) (latency < 1ms, reliability < 10^(-5)), the AI model of the network entity or the UE may apply a data type of FP32 to channel state indicator (CSI) prediction or CSI compression. In addition, a specific data type may be applied to an operation of an AI model for various purposes, such as beam prediction and/or positioning.

Operation 1434 is an operation in which the network entity 1410 transmits configuration information to the UE 1420. The configuration information may include information indicating the data type determined in operation 1432. The configuration information may indicate a data type (or AI model-related configuration) applied to the AI model of the UE 1420 and/or an output (or result) report data type of the AI model (or output report configuration of the AI model) of the UE 1420. The output report data type of the AI model of the UE 1420 may indicate a data type received by the network entity 1410 from the UE 1420. The UE 1420 may convert (or quantize) the existing AI model to an AI model to which a specific data type is applicable, based on the received configuration information, and may perform inference using the converted (or quantized) AI model. Further, the UE 1420 may transmit, to the network entity 1410, information output as a specific data type from the AI model, based on the received configuration information. The configuration information may be information in which a data type is configured for each case (use case) based on an AI model. For example, the configuration information may indicate information about a data type applied to an AI model for each of CSI compression, CSI prediction, beam management, and positioning. That is, the configuration information may be information in which a quantization level is mapped to each case based on an AI model.

In an embodiment, when the quantization level is changed, that is, when the data type to be applied to the AI model is changed, the network entity 1410 may indicate the changed data type to the UE 1420 via a low-layer message.

In an embodiment, the configuration information may indicate a predefined report format for a specific case in relation to reporting an output (or result) of the AI model. For example, the configuration information may indicate that, for a CSI prediction case, the UE performs reporting to the network entity using a predefined report format.

An exchange of the configuration information between the network entity 1410 and the UE 1420 may be performed based on an RRC message. The configuration information related to operation 1434 may be illustrated in FIG. 9 and FIG. 10.

Operation 1436 is an operation in which the UE 1420 converts (or quantizes) the AI model, based on the received configuration information, and outputs a test result using the converted (or quantized) AI model. The UE 1420 may convert (or quantify) the existing AI model of the UE to an AI model capable of processing a specific data type, based on the received configuration information. For example, when a data type processable by the existing AI model of the UE is FP32, the UE may convert the existing AI model to an AI model capable of processing a data type of INT16, based on the received configuration information (when the UE has a quantization capability).

Operation 1438 may be an operation in which the UE 1420 performs a test on the AI model converted in operation 636 and transmits a test result of information output from the converted AI model to the network entity 1410. That is, the network entity 1410 receives the test result of an output value of the AI model based on the information about the data type from the UE 1420. The UE 1420 may store a test data set for testing the AI model. The test result may be a message including an output metric of the AI model. The test result may include results of accuracy, computation speed, and reliability of predicted data.

Operation 1440 is an operation in which the network entity 1410 determines whether to continue to apply the configuration information (or data type), based on the test result received in operation 1438, and transmits a determination result to the UE 1420. The network entity 1410 may determine whether the test result (e.g., accuracy, speed, or reliability) satisfies a reference condition, and may transmit, to the UE, indication information (e.g., a 1-bit message) (e.g., a DCI, MAC CE, or RRC message) indicating whether to use the configuration information, based on a determination result. The indication information indicating whether to use the configuration information may correspond to indication information indicating whether to use the converted AI model (or quantized AI model).

In an embodiment, when the test result fails to satisfy the reference condition, the network entity 1410 may change the configuration information (or data type information) and transmit the same to the UE. The UE may convert the AI model, based on the changed configuration information, and may generate a test result again, based on an output of the converted AI model. The UE may transmit the test result to the network entity. That is, in the communication method according to the embodiment of the disclosure, when the test result of the converted AI model fails to satisfy the reference condition, the network entity may change the configuration information and transmit the changed configuration information to the UE, and the UE may test the AI model based on the changed configuration information and transmit a test result to the network entity. These operations may be repeatedly performed until a test result satisfying the reference is obtained.

In an embodiment, when the network entity 1410 is able to directly transmit an AI model to the UE 1420, operations 1436 to 1440 may be omitted.

Operation 1442 is an example of prediction or management-related operations (e.g., a positioning operation) based on the AI model.

Operation 14421 is an operation in which the network entity 1410 transmits a position reference signal (PRS) to the UE 1420.

Operation 14422 is an operation in which the UE 1420 generates output information from the AI model of the UE, based on the received PRS.

Operation 14423 is an operation in which the UE 1420 transmits the output information in operation 14422 to the network entity 1410.

Operation 14424 is an operation in which the network entity 1410 executes the AI model of the network entity and outputs information, based on the output information from the AI model of the UE.

While operations 14421 to 14424 illustrate the positioning operation, operations of various cases, such as CSI prediction, CSI compression, and/or beam prediction, may also be applied.

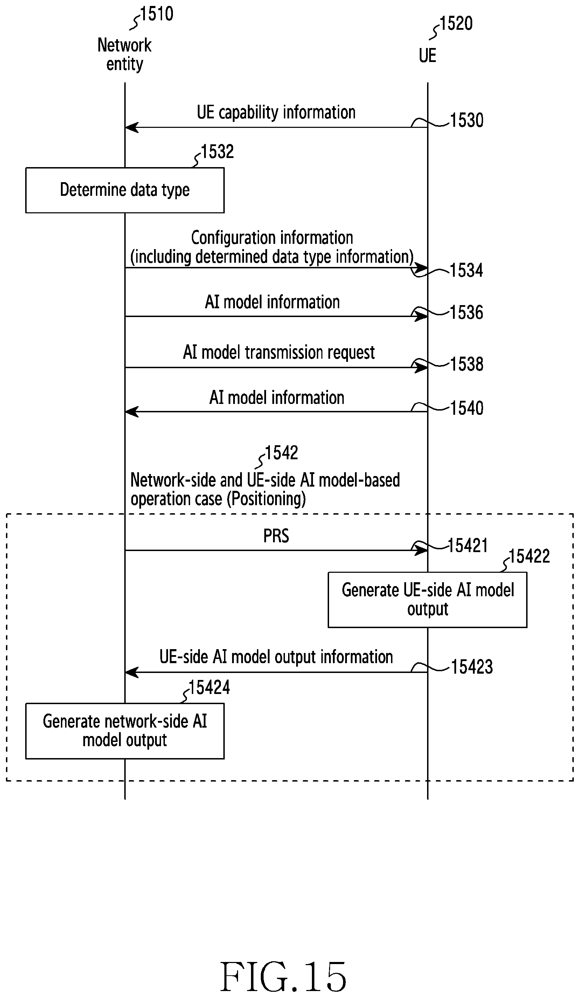

FIG. 15 is a diagram illustrating a communication method according to an embodiment of the disclosure.

FIG. 15 illustrates transmission and reception operations between a network entity 1510 and a UE 1520. The network entity 1510 of FIG. 15 may correspond to the network entity of FIG. 3. The UE 1520 of FIG. 15 may correspond to the UE of FIG. 2.

The embodiment of FIG. 15 may illustrate a case where the network entity 1510 and the UE 1520 transmit an AI model to each other. That is, FIG. 15 may illustrate an embodiment in which the network entity 1510 and the UE 1520 are not capable of quantizing an AI model. The network entity 1510 and the UE 1520 may transmit/receive an AI model to/from each other through each connected server device. That is, even though the network entity 1510 and the UE 1520 are unable to use and quantize an AI model, the network entity 1510 and the UE 1520 may receive an AI model from another node (or server) and transmit/receive the AI model to/from each other.

Hereinafter, operations for the communication method of FIG. 15 are described.

Operation 1530 is an operation in which the network entity (e.g., a base station) 1510 receives UE capability information indicating a capability of the UE from the UE 1520. The UE capability information may indicate whether the UE uses an AI model, whether the UE is capable of quantizing the AI model, and/or information about a data type that the AI model of the UE is capable of processing. Further, the UE capability information may indicate information regarding a data type that the UE is capable of processing by quantizing the AI model. In addition, the UE capability information may include a data type and model performance information regarding an AI model that the UE is able to transmit to the network entity (see FIG. 8B).

In an embodiment, the UE capability information may include information about an element that may affect performance of the AI model. For example, the UE capability information may include information about total capacity and available capacity of a storage, information about total capacity and available capacity of a memory used for computational operations, or the like.

The UE capability information regarding the AI model is illustrated in FIG. 7 to FIG. 8.

Operation 1532 is an operation in which the network entity 1510 determines a data type to be applied to computation of an AI model (or an AI model capable of processing the corresponding data type), based on the UE capability information and/or a communication condition. The network entity 1510 may identify, through the UE capability information, whether the UE is capable of using the AI model, the information about the data type that the AI model of the UE is capable of processing, whether the UE is capable of quantizing the AI model, and/or the data type or performance information regarding the AI model that the UE is able to transmit to the network entity, thus determining an appropriate data type, based on the UE capability information. Further, the network entity 1510 may determine a data type (or an AI model capable of processing the corresponding data type), based on the communication condition. The communication condition may include an accuracy condition, a latency condition, and/or a data throughput condition for information transmitted and received. For example, according to the communication method according to the embodiment of the disclosure, an AI model of the network entity or the UE may apply a data type of FP32 to channel state indicator (CSI) prediction or CSI compression, based on a threshold value of an average data throughput (or total data throughput). Alternatively, in a communication condition of ultra-reliable low-latency communication (URLLC) (latency < 1ms, reliability < 10^(-5)), the AI model of the network entity or the UE may apply a data type of FP32 to channel state indicator (CSI) prediction or CSI prediction. In addition, a specific data type may be applied to an operation of an AI model for various purposes, such as beam prediction and/or positioning.

Operation 1534 is an operation in which the network entity 1510 transmits configuration information to the UE 1520. The configuration information may include information indicating the data type (or the AI model capable of processing the corresponding data type) determined in operation 1532. The configuration information may be information in which a data type is configured for each case (use case) based on an AI model. For example, the configuration information may indicate information about a data type applied to an AI model for each of CSI compression, CSI prediction, beam management, and positioning. That is, the configuration information may be information in which a quantization level is mapped to each case based on an AI model.

An exchange of the configuration information between the network entity 1510 and the UE 1520 may be performed based on an RRC message. The configuration information related to operation 1534 may be illustrated in FIG. 9 and FIG. 10.

Operation 1536 is an operation in which the network entity 1510 transmits AI model information to the UE 1520. When the UE has no AI model or the UE is not capable of processing data of a specific data type by converting the existing AI model, the network entity 1510 may transmit an AI model capable of processing the data of the specific data type to the UE 1520. For example, when the network entity 1510 determines to apply an FP16 data type to an AI model in a CSI prediction operation, the network entity 1510 may transmit an AI model capable of processing the FP16 data type to the UE 1520. The network entity 1510 may transmit the AI model by transmitting structure information and weight information about the AI model capable of processing the FP16 data type to the UE 1520. The UE 1520 may generate and execute the AI model, based on the received structure information and weight information about the AI model.

In the embodiment of FIG. 15, since the network entity 1510 transmits the AI model to the UE 1520, a separate AI model performance test procedure may be omitted. However, when the AI model performance test procedure is performed, the UE may perform a test on the received AI model, and may transmit a test result of information output from the received AI model to the network entity. That is, the network entity may receive the performance test result of the AI model from the UE. The test result may include results of accuracy, computation speed, and reliability of predicted data.

The network entity may determine whether to continue to use the configuration information (or data type) or the AI model transmitted to the UE, based on the received test result, and may transmit a determination result to the UE. The network entity may determine whether the test result (e.g., accuracy, speed, or reliability) satisfies a reference condition, and may transmit, to the UE, indication information (e.g., a 1-bit message) (e.g., a DCI, MAC CE, or RRC message) indicating whether to use the configuration information or the AI model, based on a determination result.

Operation 1538 is an operation in which the network entity 1510 requests the UE 1520 to transmit the AI model determined in operation 1532. A request for transmission of the AI model may include a request for a plurality of AI models. For example, the network entity 1510 may request the UE to transmit a plurality of AI models corresponding to a plurality of cases (use cases).

Operation 1540 is an operation in which the network entity 1510 receives the AI model requested in operation 1538 from the UE 1520.

When the network entity has no AI model or the network entity is not capable of processing data of a specific data type by converting the existing AI model, the network entity 1510 may request and receive an AI model capable of processing the data of the specific data type from the UE 1520. For example, when the network entity 1510 determines to apply an FP16 data type to an AI model in a CSI prediction operation, the network entity 1510 may request an AI model capable of processing the FP16 data type from the UE 1520. The UE 1520 may transmit the AI model by transmitting structure information and weight information about the AI model capable of processing the FP16 data type to the network entity 1510. The network entity 1510 may generate and execute the AI model, based on the structure information and weight information about the AI model received from the UE 1520.

In the embodiment of FIG. 15, since the network entity 1510 receives the AI model from the UE 1520, a separate AI model performance test procedure may be omitted. However, when the AI model performance test procedure is performed, the network entity may perform a test on the received AI model, and may generate a test result of information output from the received AI model. The test result may include results of accuracy, computation speed, and reliability of predicted data. The network entity may determine whether to use the received AI model, based on the generated test result.

In an embodiment, the network entity 1510 may perform a test on the AI model received in operation 1540. The network entity 1510 may store a test data set for performing the test on the received AI model. The network entity 1510 may determine whether to continue to use the received AI model, based on a test result. The network entity 1510 may determine whether the test result (e.g., accuracy, speed, or reliability) satisfies a reference condition, and may transmit a request for transmission of another AI model to the UE when the test result does not satisfy the reference condition. In the communication method according to the embodiment of the disclosure, when the test result of the AI model received by the network entity fails to satisfy the reference condition, the network entity may transmit a request for transmission of another AI model to the UE, may receive another AI model, and may perform a test again. These operations may be repeatedly performed until a test result satisfying the reference is obtained.

Operation 1542 is an example of prediction or management-related operations (e.g., a positioning operation) based on the AI model.

Operation 15421 is an operation in which the network entity 1510 transmits a position reference signal (PRS) to the UE 1520.

Operation 15422 is an operation in which the UE 1520 generates output information from the AI model of the UE, based on the received PRS.

Operation 15423 is an operation in which the UE 1520 transmits the output information in operation 15422 to the network entity 1510.

Operation 15424 is an operation in which the network entity 1510 executes the AI model of the network entity and outputs information, based on the output information from the AI model of the UE.

While operations 15421 to 15424 illustrate the positioning operation, operations of various cases, such as CSI prediction, CSI compression, and/or beam prediction, may also be applied.

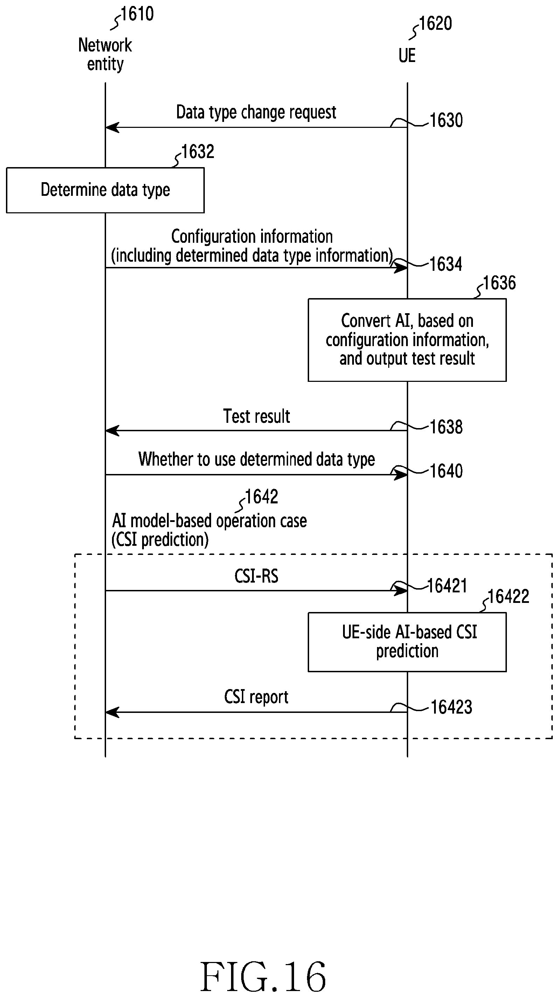

FIG. 16 is a diagram illustrating a communication method according to an embodiment of the disclosure.

FIG. 16 illustrates transmission and reception operations between a network entity 1610 and a UE 1620. The network entity 1610 of FIG. 16 may correspond to the network entity of FIG. 3. The UE 1620 of FIG. 16 may correspond to the UE of FIG. 2.

The embodiment of FIG. 16 illustrates a case where the UE 1620 requests the network entity 1610 to change a data type, that is, to change a quantization level.

Hereinafter, operations for the communication method of FIG. 16 are described.

Operation 1630 is an operation in which the network entity (e.g., a base station) 1610 receives a data type change request from the UE. The data type change request may include UE capability information indicating a capability of the UE. The UE capability information may indicate whether the UE uses an AI model, whether the UE is capable of quantizing the AI model, and/or information about a data type that the AI model of the UE is capable of processing. Further, the UE capability information may indicate information regarding a data type that the UE is capable of processing by quantizing the AI model. In addition, the UE capability information may include a data type and model performance information regarding an AI model that the UE is able to transmit to the network entity (see FIG. 8B).

The data type change request of operation 1630 may include information indicating a data type changeable for each AI-based operation case of the UE, information about a case in which a data type change is required, and the like. For example, the data type change request may include a data type that is applicable by the UE in an AI-based CSI prediction operation. In addition, for example, the data type change request may include a data type change request for an AI-based CSI compression operation. The data type change request may be information transmitted and received in a bitmap (one-hot encoding) format.

The data type change request of operation 1630 may be transmitted and received via an RRC message. The data type change request may be an on-demand request of the UE, an on-demand request of the network entity, or a periodic request.

In an embodiment, the UE capability information may include information about an element that may affect performance of the AI model. For example, the UE capability information may include information about total capacity and available capacity of a storage, information about total capacity and available capacity of a memory used for computational operations, or the like.

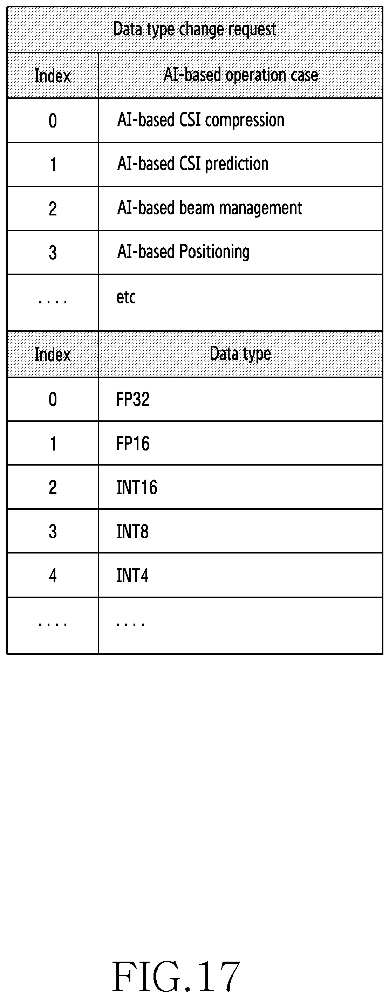

The information included in the data type change request of the UE may be illustrated in FIG. 17.

Operation 1632 is an operation the network entity 1810 determines a data type to be applied to computation of an AI model, based on the data type change request, the UE capability information, and/or a communication condition. The network entity 1610 may identify, through the UE capability information, whether the UE is capable of using the AI model, the information about the data type that the AI model of the UE is capable of processing, and/or whether the UE is capable of quantizing the AI model, thus determining an appropriate data type, based on the UE capability information. Further, the network entity 1610 may determine a data type, based on the information included in the data type change request.

In addition, the network entity 1610 may determine a data type, based on the communication condition. The communication condition may include an accuracy condition, a latency condition, and/or a data throughput condition for information transmitted and received. For example, according to the communication method according to the embodiment of the disclosure, an AI model of the network entity or the UE may apply a data type of FP32 to channel state indicator (CSI) prediction or CSI compression, based on a threshold value of an average data throughput (or total data throughput). Alternatively, in a communication condition of ultra-reliable low-latency communication (URLLC) (latency < 1ms, reliability < 10^(-5)), the AI model of the network entity or the UE may apply a data type of FP32 to channel state indicator (CSI) prediction or CSI prediction. In addition, a specific data type may be applied to an operation of an AI model for various purposes, such as beam prediction and/or positioning.

Operation 1634 is an operation in which the network entity 1610 transmits configuration information to the UE 1620. The configuration information may include information indicating the data type determined in operation 1632. The configuration information may indicate a data type (or AI model-related configuration) applied to the AI model of the UE 1620 and/or an output (or result) report data type of the AI model (or output report configuration of the AI model) of the UE 1620. The output report data type of the AI model of the UE 1620 may indicate a data type received by the network entity 1610 from the UE 1620. The UE 1620 may convert (or quantize) the existing AI model to an AI model to which a specific data type is applicable, based on the received configuration information, and may perform inference using the converted (or quantized) AI model. Further, the UE 1620 may transmit, to the network entity 1610, information output as a specific data type from the AI model, based on the received configuration information. The configuration information may be information in which a data type is configured for each case (use case) based on an AI model. For example, the configuration information may indicate information about a data type applied to an AI model for each of CSI compression, CSI prediction, beam management, and positioning. That is, the configuration information may be information in which a quantization level is mapped to each case based on an AI model.

In an embodiment, when the quantization level is changed, that is, when the data type to be applied to the AI model is changed, the network entity 1610 may indicate the changed data type to the UE 1620 via a low-layer message.

In an embodiment, the configuration information may indicate a predefined report format for a specific case in relation to report an output (or result) of the AI model. For example, the configuration information may indicate that, for a CSI prediction case, the UE performs report to the network entity using a predefined report format.

An exchange of the configuration information between the network entity 1610 and the UE 1620 may be performed based on an RRC message. The configuration information related to operation 1634 may be illustrated in FIG. 9 and FIG. 10.

Operation 1636 is an operation in which the UE 1620 converts (or quantizes) the AI model, based on the received configuration information, and outputs a test result using the converted (or quantized) AI model. The UE 1620 may convert (or quantify) the existing AI model of the UE to an AI model capable of processing a specific data type, based on the received configuration information. For example, when a data type processable by the existing AI model of the UE is FP32, the UE may convert the existing AI model to an AI model capable of processing a data type of INT16, based on the received configuration information (when the UE has a quantization capability).

Operation 1638 may be an operation in which the UE 1620 performs a test on the AI model converted in operation 1636 and transmits a test result of information output from the converted AI model to the network entity 1610. That is, the network entity 1610 receives the test result of an output value of the AI model based on the information about the data type from the UE 1620. The UE 1620 may store a test data set for testing the AI model. The test result may be a message including an output metric of the AI model. The test result may include results of accuracy, computation speed, and reliability of predicted data.

Operation 1640 is an operation in which the network entity 1610 determines whether to continue to apply the configuration information (or data type), based on the test result received in operation 1638, and transmits a determination result to the UE 1620. The network entity 1610 may determine whether the test result (e.g., accuracy, speed, or reliability) satisfies a reference condition, and may transmit, to the UE, indication information (e.g., a 1-bit message) (e.g., a DCI, MAC CE, or RRC message) indicating whether to use the configuration information, based on a determination result. The indication information indicating whether to use the configuration information may correspond to indication information indicating whether to use the converted AI model (or quantized AI model).

In an embodiment, when the test result fails to satisfy the reference condition, the network entity 1610 may change the configuration information (or data type information) and transmit the same to the UE. The UE may convert the AI model, based on the changed configuration information, and may generate a test result again, based on an output of the converted AI model. The UE may transmit the test result to the network entity. That is, in the communication method according to the embodiment of the disclosure, when the test result of the converted AI model fails to satisfy the reference condition, the network entity may change the configuration information and transmit the changed configuration information to the UE, and the UE may test the AI model based on the changed configuration information and transmit a test result to the network entity. These operations may be repeatedly performed until a test result satisfying the reference is obtained.

In an embodiment, when the network entity 1610 is able to directly transmit an AI model to the UE 1620, operations 1636 to 1640 may be omitted.

Operation 1642 is an example of prediction or management-related operations (e.g., a CSI prediction operation) based on the AI model.

Operation 16421 is an operation in which the network entity 1610 transmits a CSI-reference signal (RS) to the UE 1620.

Operation 16422 is an operation in which the UE 1620 predicts a CSI using the AI model, based on the received CSI-RS.

Operation 16423 is an operation in which the UE 1620 transmits a result predicted in operation 16422 to the network entity 1610.

While operations 16421 to 16423 illustrate the CSI prediction operation, operations of various cases, such as CSI compression, beam prediction, and/or positioning, may also be applied.

FIG. 17 illustrates information regarding a data type change request according to an embodiment of the disclosure.

The information illustrated in FIG. 17 may be information included in a data type change request associated with operation 1630 of FIG. 16.

Referring to FIG. 17, the data type change request may include information about a changeable data type corresponding to an AI-based operation case. AI-based operation cases may include CSI compression, CSI prediction, beam management, and/or positioning. Data type information may be mapped to each case. For example, the data type change request may indicate that an AI model based on an FP16 data type may be used in an AI-based CSI compression operation. The data type change request may indicate an AI-based operation (e.g., CSI prediction) for which a data type change is required. The data type change request may further include UE performance information regarding a data type corresponding to each case. For example, the data type change request may include information indicating UE performance when a first data type corresponding to a first case is applied to an AI model. The information indicating the performance may include accuracy, loss, or the like. A network entity may determine a data type for a specific case, or may quantize an AI model of the network entity, based on the information included in the data type change request.

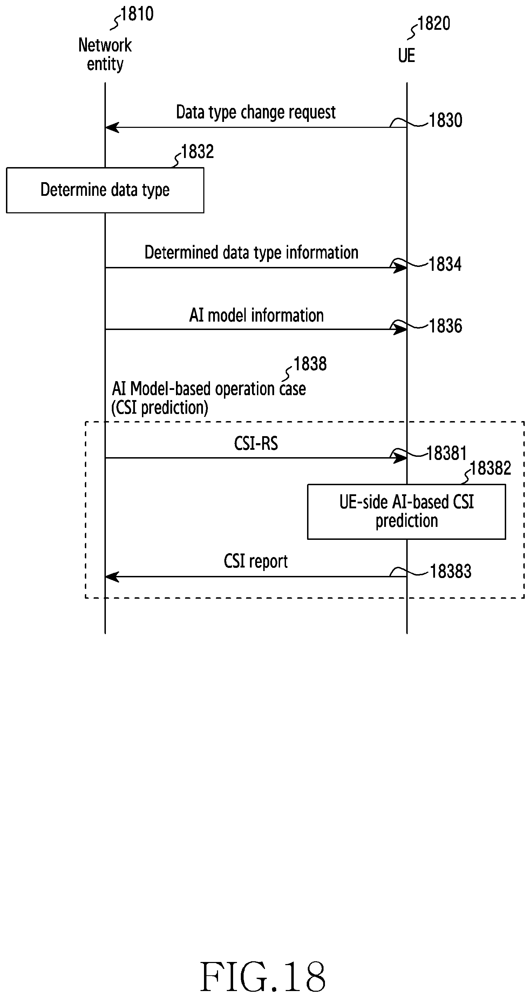

FIG. 18 is a diagram illustrating a communication method according to an embodiment of the disclosure.

The embodiment described with reference to FIG. 18 is characterized by an operation in which a network entity 1810 transmits an AI model to a UE 1820 upon a data type change request.

FIG. 18 illustrates transmission and reception operations between the network entity 1810 and the UE 1820. The network entity 1810 of FIG. 18 may correspond to the network entity of FIG. 3. The UE 1820 of FIG. 18 may correspond to the UE of FIG. 2.

The embodiment of FIG. 18 illustrates a case where the UE 1820 requests the network entity 1810 to change a data type, that is, to change a quantization level.

Hereinafter, operations for the communication method of FIG. 18 are described.

Operation 1830 is an operation in which the network entity (e.g., a base station) 1810 receives a data type change request from the UE. The data type change request may include UE capability information indicating a capability of the UE. The UE capability information may indicate whether the UE uses an AI model, whether the UE is capable of quantizing the AI model, and/or information about a data type that the AI model of the UE is capable of processing. Further, the UE capability information may indicate information regarding a data type that the UE is capable of processing by quantizing the AI model. In addition, the UE capability information may include a data type and model performance information regarding an AI model that the UE is able to transmit to the network entity (see FIG. 8B).

The data type change request of operation 1830 may include information indicating a data type changeable for each AI-based operation case of the UE, information about a case in which a data type change is required, and the like. For example, the data type change request may include a data type that is applicable by the UE in an AI-based CSI prediction operation. In addition, for example, the data type change request may include a data type change request for an AI-based CSI compression operation. The data type change request may be information transmitted and received in a bitmap (one-hot encoding) format.

The data type change request of operation 1830 may be transmitted and received via an RRC message. The data type change request may be an on-demand request of the UE, an on-demand request of the network entity, or a periodic request.

In an embodiment, the UE capability information may include information about an element that may affect performance of the AI model. For example, the UE capability information may include information about total capacity and available capacity of a storage, information about total capacity and available capacity of a memory used for computational operations, or the like.

The information included in the data type change request of the UE may be illustrated in FIG. 17.

Operation 1832 is an operation the network entity 1810 determines a data type to be applied to computation of an AI model, based on the data type change request, the UE capability information, and/or a communication condition. Alternatively, in operation 1832, the network entity 1810 may determine an AI model of the UE, based on the UE capability information and the communication condition.

The network entity 1810 may identify, through the UE capability information, whether the UE is capable of using the AI model, the information about the data type that the AI model of the UE is capable of processing, and/or whether the UE is capable of quantizing the AI model, thus determining an appropriate data type, based on the UE capability information. Further, the network entity 1810 may determine a data type, based on the information included in the data type change request.

In addition, the network entity 1810 may determine a data type, based on the communication condition. The communication condition may include an accuracy condition, a latency condition, and/or a data throughput condition for information transmitted and received. For example, according to the communication method according to the embodiment of the disclosure, an AI model of the network entity or the UE may apply a data type of FP32 to a specific AI-based operation case, based on a threshold value of an average data throughput (or total data throughput). Alternatively, in a communication condition of ultra-reliable low-latency communication (URLLC) (latency < 1ms, reliability < 10^(-5)), the AI model of the network entity or the UE may apply a data type of FP32 to channel state indicator (CSI) prediction (for example). In addition, a specific data type may be applied to an operation of an AI model for various purposes, such as beam prediction and/or positioning.

Operation 1834 is an operation in which the network entity 1810 transmits configuration information to the UE 1820. The configuration information may include information indicating the data type determined in operation 1832. The configuration information may indicate a data type (or AI model-related configuration) applied to the AI model of the UE 1820 and an output (or result) report data type of the AI model (or output report configuration of the AI model) of the UE 1820. The output report data type of the AI model of the UE 1820 may indicate a data type received by the network entity 1810 from the UE 1820. The UE 1820 may receive an AI model based on the received configuration information from the network entity 1810, and may perform inference using the received AI model. Further, the UE 1820 may transmit, to the network entity 1810, information output as a specific data type from the AI model, based on the received configuration information. The configuration information may be information in which a data type is configured for each case (use case) (e.g., CSI prediction) based on an AI model. For example, the configuration information may indicate information about a data type applied to an AI model for each of CSI compression, CSI prediction, beam management, and positioning. That is, the configuration information may be information in which a quantization level is mapped to each case based on an AI model.

An exchange of the configuration information between the network entity 1810 and the UE 1820 may be performed based on an RRC message. The configuration information related to operation 1834 may be illustrated in FIG. 9 and FIG. 10.

Operation 1836 is an operation in which the network entity 1810 transmits AI model information to the UE 1820. When the UE has no AI model or the UE is not capable of processing data of a specific data type by converting the existing AI model, the network entity 1810 may transmit an AI model capable of processing the data of the specific data type to the UE 1820. For example, when the network entity 1810 determines to apply an FP16 data type to an AI model in a CSI prediction operation, the network entity 1810 may transmit an AI model capable of processing the FP16 data type to the UE 1820. The network entity 1810 may transmit the AI model by transmitting structure information and weight information about the AI model capable of processing the FP16 data type to the UE 1820. The UE 1820 may generate and execute the AI model, based on the received structure information and weight information about the AI model.

In the embodiment of FIG. 18, since the network entity 1810 transmits the AI model to the UE 1820, an AI model performance test procedure may be omitted. However, when the AI model performance test procedure is performed, the UE may perform a test on the received AI model, and may transmit a test result of information output from the received AI model to the network entity. That is, the network entity may receive the performance test result of the AI model from the UE. The test result may include results of accuracy, computation speed, and reliability of predicted data.

The network entity may determine whether to continue to use the configuration information (or data type) or the AI model transmitted to the UE, based on the test result, and may transmit a determination result to the UE. The network entity may determine whether the test result (e.g., accuracy, speed, or reliability) satisfies a reference condition, and may transmit, to the UE, indication information (e.g., a 1-bit message) (e.g., a DCI, MAC CE, or RRC message) indicating whether to use the configuration information or the AI model, based on a determination result.

In an embodiment, when the test result fails to satisfy the reference condition, the network entity may change the configuration information (or data type information) and transmit another AI model to the UE. The UE may generate a test result again, based on an output from the AI model received again. That is, in the communication method according to the embodiment of the disclosure, when the test result of the AI model received by the UE fails to satisfy the reference condition, the network entity may transmit another AI model to the UE, and the UE may test the AI model again and transmit a test result to the network entity. These operations may be repeatedly performed until a test result satisfying the reference is obtained.

Operation 1838 is an example of prediction or management-related operations (e.g., a CSI prediction operation) based on the AI model.

Operation 18381 is an operation in which the network entity 1810 transmits a CSI-reference signal (RS) to the UE 1820.

Operation 18382 is an operation in which the UE 1820 predicts a CSI using the AI model, based on the received CSI-RS.

Operation 18383 is an operation in which the UE 1820 transmits a result predicted in operation 18382 to the network entity 1810.

While operations 18381 to 18383 illustrate the CSI prediction operation, operations of various cases, such as CSI compression, beam prediction, and/or positioning, may also be applied.

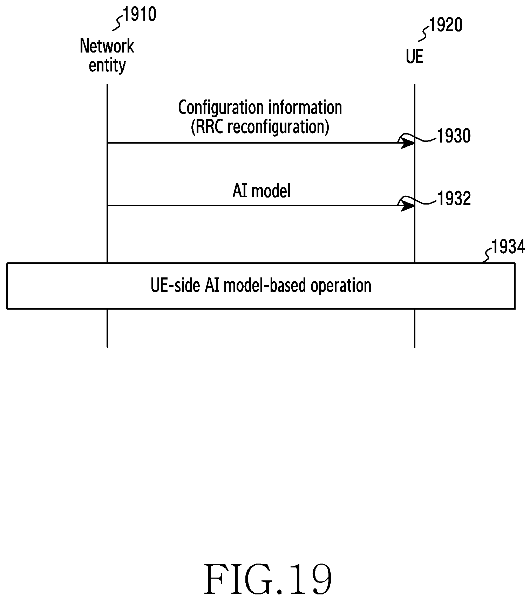

FIG. 19 is a diagram illustrating a communication method according to an embodiment of the disclosure.

According to the embodiment described with reference to FIG. 19, when a data type to be used in an AI model is predefined, a network entity 1910 may transmit an AI model to a UE 1920.

FIG. 19 illustrates transmission and reception operations between the network entity 1910 and the UE 1920. The network entity 1910 of FIG. 19 may correspond to the network entity of FIG. 3. The UE 1920 of FIG. 19 may correspond to the UE of FIG. 2.

The embodiment of FIG. 19 is an embodiment of transmission and reception operations between the network entity 1910 and the UE 1920 when a data type of an AI model for each AI-based operation case (e.g., CSI prediction and CSI compression) is predefined.

Hereinafter, operations for the communication method of FIG. 19 are described.

Operation 1930 is an operation in which the network entity 1910 transmits configuration information to the UE 1920. In the embodiment of FIG. 19, since it is assumed that the data type of the AI model for each AI-based operation case is predefined, the configuration information does not need to include corresponding information. However, the configuration information may include an output report data type of an AI model of the UE. The configuration information may indicate a type of data received by the network entity 1910 from the UE 1920. The UE 1920 may transmit information to the network entity 1910 in the predefined data type, and may transmit output information from the AI model to the network entity 1910, based on the configuration information received in operation 1930. An exchange of the configuration information between the network entity 1910 and the UE 1920 may be performed based on an RRC message (e.g., an RRC reconfiguration message).

Operation 1932 is an operation in which the network entity 1910 transmits an AI model to the UE 1920. The network entity 1910 may transmit an appropriate AI model to the UE 1920 according to the predefined data type.

Operation 1934 refers to operations based on the AI model of the UE. For example, transmission and reception operations between the network entity 1910 and the UE 1920 for CSI prediction, CSI compression, beam management (or prediction), and/or positioning may be included. The UE 1920 may use the AI model received in operation 1932, and may transmit the output information from the AI model to the network entity 1910, based on the configuration information.

In the embodiment of FIG. 19, operation 1934 illustrates the operations based on the AI model of the UE (one-sided model), but may include operations using AI models of both the UE and the network entities (two-sided models) using AI models of both the UE and the network entity or operations based on the AI model of the network entity.

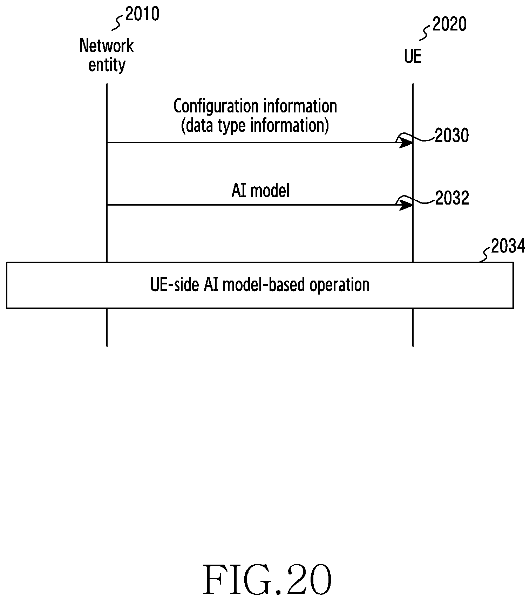

FIG. 20 is a diagram illustrating a communication method according to an embodiment of the disclosure.

FIG. 20 illustrates transmission and reception operations between a network entity 2010 and a UE 2020. The network entity 2010 of FIG. 20 may correspond to the network entity of FIG. 3. The UE 2020 of FIG. 20 may correspond to the UE of FIG. 2.

The embodiment of FIG. 20 is an embodiment of transmission and reception operations between the network entity 2010 and the UE 2020 when a data type of an AI model for each AI-based operation case (e.g., CSI prediction and CSI compression) is predefined. The embodiment of FIG. 20 illustrates a case in which a report data type of the UE 2020 needs changing during communication between the network entity 2010 and the UE 2020.

Hereinafter, operations for the communication method of FIG. 20 are described.

Operation 2030 is an operation in which the network entity 2010 transmits configuration information indicating a report data type to the UE 2020. The configuration information may indicate a type of data received by the network entity 2010 from the UE 2020. The UE 2020 may transmit output information from an AI model to the network entity 2010, based on changed report data type information received in operation 2030.

Operation 2032 is an operation in which the network entity 2010 transmits an AI model to the UE 2020. The network entity 2010 may transmit an appropriate AI model to the UE 2020, based on the changed report data type information. Alternatively, the network entity 2010 may transmit an appropriate AI model to the UE 2020 according to a predefined data type.

Operation 2034 refers to operations based on the AI model of the UE. For example, transmission and reception operations between the network entity 2010 and the UE 2020 for CSI prediction, CSI compression, beam management (or prediction), and/or positioning may be included. The UE 2020 may use the AI model received in operation 2032, and may transmit the output information from the AI model to the network entity 2010, based on the report data type information.

In the embodiment of FIG. 20, operation 2034 illustrates the operations based on the AI model of the UE (one-sided model), but may include operations using AI models of both the UE and the network entities (two-sided models) using AI models of both the UE and the network entity or operations based on the AI model of the network entity.

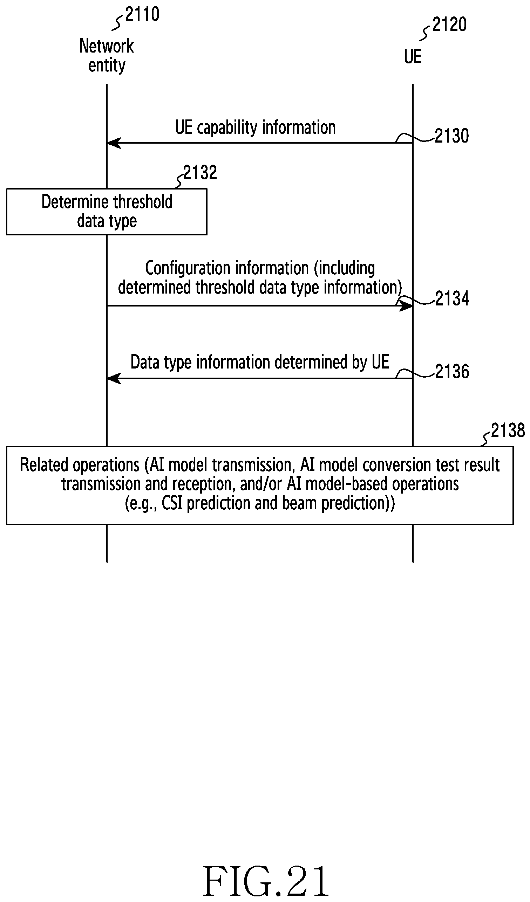

FIG. 21 is a diagram illustrating a communication method according to an embodiment of the disclosure.

FIG. 21 illustrates transmission and reception operations between a network entity 2110 and a UE 2120. The network entity 2110 of FIG. 21 may correspond to the network entity of FIG. 3. The UE 2120 of FIG. 21 may correspond to the UE of FIG. 2.

Hereinafter, operations for the communication method of FIG. 21 are described.

Operation 2130 is an operation in which the network entity (e.g., a base station) 2110 receives UE capability information indicating a capability of the UE from the UE. The UE capability information may indicate whether the UE uses an AI model, whether the UE is capable of quantizing the AI model, and/or information about a data type that the AI model of the UE is capable of processing. Further, the UE capability information may indicate information regarding a data type that the UE is capable of processing by quantizing the AI model. In addition, the UE capability information may include a data type and performance information regarding an AI model that the UE is able to transmit to the network entity (see FIG. 8B).

In an embodiment, the UE capability information may include information about an element that may affect performance of the AI model. For example, the UE capability information may include information about total capacity and available capacity of a storage, information about total capacity and available capacity of a memory used for computational operations, or the like.

The UE capability information regarding the AI model is illustrated in FIG. 7 to FIG. 8.

Operation 2132 is an operation in which the network entity 2110 determines a data type to be applied to computation of an AI model, based on the UE capability information and a communication condition. The network entity 2110 may determine a threshold data type. When the threshold data type is determined, data types having lower complexity than the threshold data type or data types having higher complexity than the threshold data type may be allowed. For example, when the threshold data type is determined to be "INT16," data types having higher complexity than INT16 may be allowed together with INT16. Alternatively, when the threshold data type is determined to be "INT16," data types having lower complexity than INT16 may be allowed together with INT16. Therefore, a data type to be applied to the AI model may be selected by the UE. The threshold data type has been described above with reference to FIG. 9.

The network entity 2110 may identify, through the UE capability information, whether the UE is capable of using the AI model, the information about the data type that the AI model of the UE is capable of processing, and/or whether the UE is capable of quantizing the AI model, thus determining an appropriate data type, based on the UE capability information. Further, the network entity 2110 may determine a data type, based on the communication condition. The communication condition may include an accuracy condition, a latency condition, and/or a data throughput condition for information transmitted and received. For example, according to the communication method according to the embodiment of the disclosure, an AI model of the network entity or the UE may apply a data type of FP32 to channel state indicator (CSI) prediction or CSI compression, based on a threshold value of an average data throughput (or total data throughput). Alternatively, in a communication condition of ultra-reliable low-latency communication (URLLC) (latency < 1ms, reliability < 10^(-5)), the AI model of the network entity or the UE may apply a data type of FP32 to channel state indicator (CSI) prediction or CSI compression. In addition, a specific data type may be applied to an operation of an AI model for various purposes, such as beam prediction and/or positioning.

Operation 2134 is an operation in which the network entity 2110 transmits configuration information to the UE 2120. The configuration information may include information indicating the data type determined in operation 2132. The configuration information may indicate a data type (or AI model-related configuration) applied to the AI model of the UE 2120 and/or an output (or result) report data type of the AI model (or output report configuration of the AI model) of the UE 2120. The output report data type of the AI model of the UE 2120 may indicate a data type received by the network entity 2110 from the UE 2120. The UE 2120 may convert (or quantize) the existing AI model to an AI model to which a specific data type is applicable, based on the received configuration information, and may perform inference using the converted (or quantized) AI model. Further, the UE 2120 may transmit, to the network entity 2110, information output as a specific data type from the AI model, based on the received configuration information. The configuration information may be information in which a data type is configured for each case (use case) based on an AI model. For example, the configuration information may indicate information about a data type applied to an AI model for each of CSI compression, CSI prediction, beam management, and positioning.

An exchange of the configuration information between the network entity 2110 and the UE 2120 may be performed based on an RRC message. The configuration information related to operation 2134 may be illustrated in FIG. 9 and FIG. 10.

Operation 2136 is an operation in which the UE 2120 transmits data type information to the network entity 2110. Since the UE 2120 receives threshold data type information in operation 2134, the UE 2120 may determine a data type to be applied to the AI model among a plurality of available data types, and may transmit information about the determined data type to the network entity 2110. In operation 2136, transmission and reception may be performed through low-layer signaling, such as UCI/MAC CE, or RRC signaling.

In an embodiment, the network entity 2110 may transmit information about a data type processable by the AI model of the network entity 2110 to the UE 2120. Therefore, the UE 2120 may determine data type information in consideration of performance of the AI model of the network entity 2110 before operation 2136.

Operation 2138 illustrates operations of transmitting and receiving an AI model, converting (or quantizing) an AI model, and/or transmitting and receiving a test result of an AI model. Details of the operations are included in the descriptions of FIG. 6, FIG. 11 to FIG. 16, and FIG. 18 to FIG. 21.

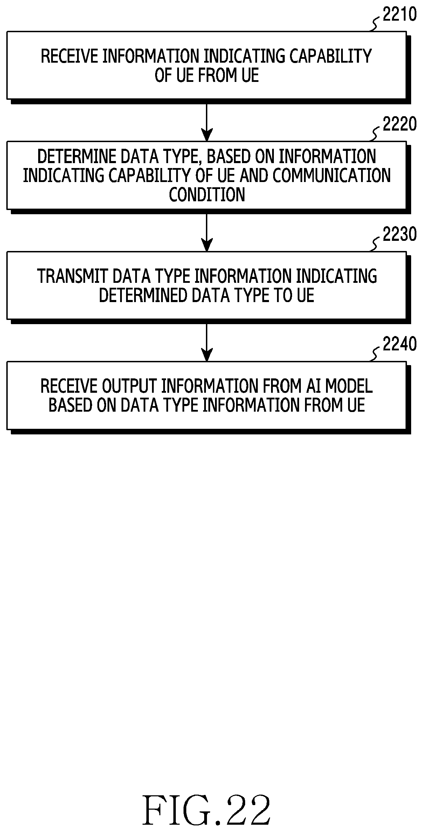

FIG. 22 is a diagram illustrating a method of a network entity according to an embodiment of the disclosure.

Referring to FIG. 22, operations of the network entity are illustrated. The network entity in FIG. 22 may correspond to the network entity of FIG. 3.

Operation 2210 is an operation in which the network entity receives information indicating a capability of a UE from the UE. The UE capability information may indicate whether the UE uses an AI model, whether the UE is capable of quantizing the AI model, information about a data type that the AI model of the UE is capable of processing, and/or information about an AI model that the UE is able to transmit to the network entity. Further, the UE capability information may indicate information regarding a data type that the UE is capable of processing by quantizing the AI model.

In an embodiment, the UE capability information may include information about an element that may affect performance of the AI model. For example, the UE capability information may include information about total capacity and available capacity of a storage, information about total capacity and available capacity of a memory used for computational operations, or the like.

In an embodiment, operation 2210 may be an operation in which the network entity receives a request to change a previously configured data type from the UE.

The UE capability information regarding the AI model is illustrated in FIG. 7 to FIG. 8.

Operation 2210 may correspond to operation 630 of FIG. 6, operation 1130 of FIG. 11, operation 1230 of FIG. 12, operation 1330 of FIG. 13, operation 1430 of FIG. 14, operation 1530 of FIG. 15, operation 1630 of FIG. 16, operation 1830 of FIG. 18, or operation 2130 of FIG. 21.

Operation 2220 is an operation in which the network entity determines a data type, based on the information indicating the capability of the UE and a communication condition. The network entity may identify, through the UE capability information, whether the UE is capable of using the AI model, the information about the data type that the AI model of the UE is capable of processing, whether the UE is capable of quantizing the AI model, and/or the data type or model performance information regarding the AI model that the UE is able to transmit to the network entity, thus determining an appropriate data type, based on the UE capability information. Further, the network entity may determine a data type, based on the communication condition. The communication condition may include an accuracy condition, a latency condition, and/or a data throughput condition for information transmitted and received. For example, according to the communication method according to the embodiment of the disclosure, an AI model of the network entity or the UE may apply a data type of FP32 to channel state indicator (CSI) prediction or CSI compression, based on a threshold value of an average data throughput (or total data throughput). Alternatively, in a communication condition of ultra-reliable lowlatency communication (URLLC) (latency < 1ms, reliability < 10^(-5)), the AI model of the network entity or the UE may apply a data type of FP32 to channel state indicator (CSI) prediction or CSI compression. In addition, a specific data type may be applied to an operation of an AI model for various purposes, such as beam prediction and/or positioning.

Operation 2220 may correspond to operation 632 of FIG. 6, operation 1132 of FIG. 11, operation 1232 of FIG. 12, operation 1332 of FIG. 13, operation 1432 of FIG. 14, operation 1532 of FIG. 15, operation 1632 of FIG. 16, operation 1832 of FIG. 18, or operation 2132 of FIG. 21.

Operation 2230 is an operation in which the network entity transmits data type information indicating the determined data type to the UE. The data type information may indicate a data type (or AI model-related configuration) applied to the AI model of the UE and/or an output (or result) report data type of the AI model (or output report configuration of the AI model) of the UE. The output report data type of the AI model of the UE may indicate a data type received by the network entity from the UE. The UE may convert (or quantize) the existing AI model to an AI model to which a specific data type is applicable, based on the received data type information, and may perform inference using the converted (or quantized) AI model. Further, the UE may transmit, to the network entity, information output as a specific data type from the AI model, based on the received data type information. The data type information may be information in which a data type is configured for each case (use case) based on an AI model. For example, the data type information may indicate information about a data type applied to an AI model for each of CSI compression, CSI prediction, beam management, and positioning. That is, the data type information may be information in which a quantization level is mapped to each case based on an AI model.

Operation 2230 may correspond to operation 634 in FIG. 6, operation 1134 in FIG. 11, operation 1234 in FIG. 12, operation 1334 in FIG. 13, operation 1434 in FIG. 14, operation 1534 in FIG. 15, operation 1634 in FIG. 16, operation 1834 in FIG. 18, or operation 2134 in FIG. 21.

Operation 2240 is an operation in which the network entity receives output information from an AI model from the UE, based on the data type information. For example, when a data type of data to be reported from the UE to the network entity is configured to INT 16, the UE may transmit data output from the AI model to the network entity as an INT16 type. The output data from the AI model of the UE may be a test result indicating performance of the AI model of the UE, and may be prediction information or a vector according to an AI-based operation case (e.g., CSI prediction, CSI compression, or beam prediction).

In an embodiment, the network entity may further perform an operation of receiving a test result of an output value of the AI model based on the data type information from the UE and an operation of determining whether to use the determined data type, based on the test result and transmitting information indicating whether to use the determined data type to the UE. These operations may correspond to operation 638 to operation 640 of FIG. 6, operation 1438 to operation 1440 or FIG. 14, and operation 1638 to operation 1640 of FIG. 16.

In an embodiment, the network entity may perform an operation of requesting, from the UE, information about an AI model to which the determined data type is applicable and receiving, from the UE, structure and weight information about the AI model to which the determined data type is applicable. These operations may correspond to operation 1336 of FIG. 13 to operation 1338 of FIG. 13.

In an embodiment, the network entity may transmit structure and weight information about a first AI model to which a first data type is applicable to the UE, and may receive structure and weight information about a second AI model to which a second data type is applicable from the UE. These operations may correspond to operation 1536 to operation 1540 of FIG. 15.

Although the operations of the communication methods according to the embodiments of the disclosure have been described separately for each embodiment, the operations included in each embodiment may be combined with the operations of other embodiments to form a new embodiment. Therefore, a combined embodiment not explicitly described as an individual embodiment in the disclosure may also be understood as being described by the disclosure.

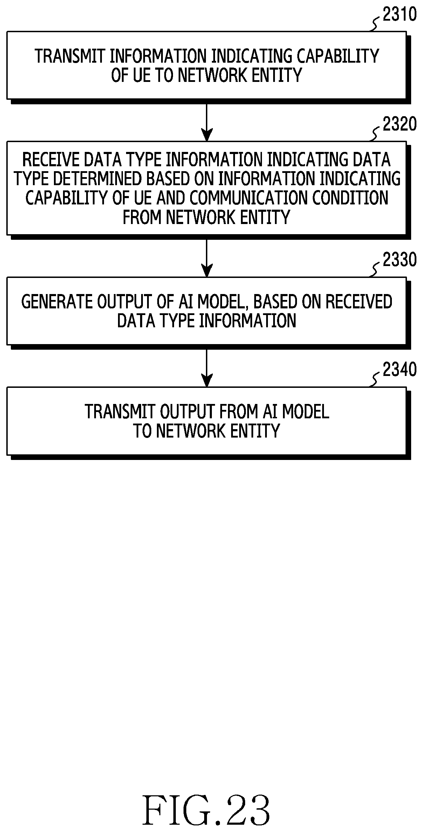

FIG. 23 is a diagram illustrating a method of a UE according to an embodiment of the disclosure.

Referring to FIG. 23, operations of the UE are illustrated. The UE of FIG. 23 may correspond to the UE of FIG. 2.

Operation 2310 is an operation in which the UE transmits information indicating a capability of the UE to a network entity. The UE capability information may indicate whether the UE uses an AI model, whether the UE is capable of quantizing the AI model, information about a data type that the AI model of the UE is capable of processing, and/or information about an AI model that the UE is able to transmit to the network entity. Further, the UE capability information may indicate information regarding a data type that the UE is capable of processing by quantizing the AI model.

In an embodiment, the UE capability information may include information about an element that may affect performance of the AI model. For example, the UE capability information may include information about total capacity and available capacity of a storage, information about total capacity and available capacity of a memory used for computational operations, or the like.

In an embodiment, operation 2310 may be an operation in which the UE transmits a request to change a previously configured data type to the network entity.

The UE capability information regarding the AI model is illustrated in FIG. 7 to FIG. 8.

Operation 2310 may correspond to operation 630 of FIG. 6, operation 1130 of FIG. 11, operation 1230 of FIG. 12, operation 1330 of FIG. 13, operation 1430 of FIG. 14, operation 1530 of FIG. 15, operation 1630 of FIG. 16, operation 1830 of FIG. 18, or operation 2130 of FIG. 21.

Operation 2320 is an operation in which the UE receives data type information indicating a determined data type from the network entity. The data type information may indicate a data type (or AI model-related configuration) applied to the AI model of the UE and/or an output (or result) report data type of the AI model (or output report configuration of the AI model) of the UE. The output report data type of the AI model of the UE may indicate a data type received by the network entity from the UE. The UE may convert (or quantize) the existing AI model to an AI model to which a specific data type is applicable, based on the received data type information, and may perform inference using the converted (or quantized) AI model. Further, the UE may transmit, to the network entity, information output as a specific data type from the AI model, based on the received data type information. The data type information may be information in which a data type is configured for each case (use case) based on an AI model. For example, the data type information may indicate information about a data type applied to an AI model for each of CSI compression, CSI prediction, beam management, and positioning. That is, the data type information may be information in which a quantization level is mapped to each case based on an AI model.

Operation 2320 may correspond to operation 634 in FIG. 6, operation 1134 in FIG. 11, operation 1234 in FIG. 12, operation 1334 in FIG. 13, operation 1434 in FIG. 14, operation 1534 in FIG. 15, operation 1634 in FIG. 16, operation 1834 in FIG. 18, or operation 2134 in FIG. 21.

Operation 2330 is an operation in which the UE generates an output of the AI model, based on the data type information received in operation 2320.

Operation 2340 is an operation in which the UE transmits output information from the AI model to the network entity, based on the data type information. For example, when a data type of data to be reported from the UE to the network entity is configured to INT 16, the UE may transmit data output from the AI model to the network entity as an INT16 type. The output data from the AI model of the UE may be a test result indicating performance of the AI model of the UE, and may be prediction information or a vector according to an AI-based operation case (e.g., CSI prediction, CSI compression, or beam prediction).

In an embodiment, the UE may further perform an operation of transmitting a test result of an output value of the AI model based on the data type information to the network entity and an operation of receiving information indicating whether to use the determined data type from the network entity. These operations may correspond to operation 638 to operation 640 of FIG. 6, operation 1438 to operation 1440 or FIG. 14, and operation 1638 to operation 1640 of FIG. 16.

In an embodiment, the UE may perform an operation of receiving a request for an AI model to which the determined data type is applicable from the network entity and transmitting structure and weight information about the AI model to which the determined data type is applicable to the network entity. These operations may correspond to operation 1336 of FIG. 13 to operation 1338 of FIG. 13.

In an embodiment, the UE may receive structure and weight information about a first AI model to which a first data type is applicable from the network entity, and may transmit structure and weight information about a second AI model to which a second data type is applicable to the network entity. These operations may correspond to operation 1536 to operation 1540 of FIG. 15.

Although the operations of the communication methods according to the embodiments of the disclosure have been described separately for each embodiment, the operations included in each embodiment may be combined with the operations of other embodiments to form a new embodiment. Therefore, a combined embodiment not explicitly described as an individual embodiment in the disclosure may also be understood as being described by the disclosure.

The communication methods according to the embodiments of the disclosure may use a quantized AI model in various types of AI model-based communication environments, regardless of a form of using an AI model in communication, thereby being universally used.

In addition, the communication methods according to the embodiments of the disclosure may effectively use an AI model in diverse communication environments involving AI model performance degradation, AI model variations across device manufacturers, cell-specific AI models, and methods for supporting AI models at each base station.

The communication methods according to the embodiments of the disclosure may determine an appropriate data type to be applied to an AI model in consideration of performance of a UE and a communication condition, thereby improving transmission and reception efficiency under various conditions. The communication methods according to the embodiments of the disclosure may achieve enhanced computing speed, enhanced low-power performance, and optimized storage space through quantization of an AI model.

It should be appreciated that the embodiments and the terms used therein are not intended to limit the technological features set forth herein to particular embodiments and the disclosure includes various changes, equivalents, or alternatives for a corresponding embodiment. With regard to the description of the drawings, similar reference numerals may be used to designate similar or relevant elements. A singular form of a noun corresponding to an item may include one or more of the items, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. Such terms as "a first," "a second," "the first," and "the second" may be used to simply distinguish a corresponding element from another, and does not limit the elements in other aspect (e.g., importance or order). If an element (e.g., a first element) is referred to, with or without the term "operatively" or "communicatively", as "coupled with/to" or "connected with/to" another element (e.g., a second element), it means that the element may be coupled/connected with/to the other element directly (e.g., wiredly), wirelessly, or via a third element.

As used in various embodiments of the disclosure, the term "module" may include a unit implemented in hardware, software, or firmware, and may be interchangeably used with other terms, for example, "logic," "logic block," "component," or "circuit". The "module" may be a single integrated component, or a minimum unit or part thereof, adapted to perform one or more functions. For example, according to an embodiment, the "module" may be implemented in the form of an application-specific integrated circuit (ASIC).

Various embodiments as set forth herein may be implemented as software (e.g., the program 140) including one or more instructions stored in a storage medium (e.g., the internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Herein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, methods according to various embodiments of the disclosure may be included and provided in a computer program product. The computer program product may be traded as a product between a seller and a purchaser. The computer program product may be distributed in the form of a machine-readable storage medium (e.g., compact disc read only memory (CD-ROM)), or be distributed (e.g., downloaded or uploaded) online via an application store (e.g., Play Store TM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each element (e.g., a module or a program) of the above-described elements may include a single entity or multiple entities, and some of the multiple entities may be separately disposed in any other element. According to various embodiments, one or more of the above-described elements or operations may be omitted, or one or more other elements or operations may be added. Alternatively or additionally, a plurality of elements (e.g., modules or programs) may be integrated into a single element. In such a case, according to various embodiments, the integrated element may still perform one or more functions of each of the plurality of elements in the same or similar manner as they are performed by a corresponding one of the plurality of elements before the integration. According to various embodiments, operations performed by the module, the program, or another element may be carried out sequentially, in parallel, repeatedly, or heuristically, or one or more of the operations may be executed in a different order or omitted, or one or more other operations may be added.

## Claims

1. A method performed by a base station in a wireless communication system, the method comprising:
receiving, from a user equipment (UE), first information comprising a data type processable by the UE;
determining a data type, based on the first information and a communication condition; and
transmitting, to the UE, second information comprising the determined data type,
wherein the second information comprises one of an integer type and a real number type, the integer type and the real number type being classified based on a number of bits for expressing data, and
wherein the communication condition is related to at least one of data throughput, latency, and accuracy.

2. The method of claim 1, further comprising receiving, from the UE, data output from an AI model of the UE,
wherein the second information comprises a data type applied to the AI model of the UE and a type of the data output from the AI model of the UE.

3. The method of claim 1, further comprising:
receiving, from the UE, a test result of an output value of an AI model, based on the second information;
determining whether to use the determined data type, based on the test result; and
transmitting, to the UE, information indicating whether to use the determined data type.

4. The method of claim 1, further comprising transmitting, to the UE, structure and weight information of an AI model to which the determined data type is applicable.

5. The method of claim 1, further comprising:
transmitting, to the UE, a request for information about an AI model to which the determined data type is applicable; and
receiving, from the UE, structure and weight information of the AI model to which the determined data type is applicable.

6. The method of claim 1, further comprising:
transmitting, to the UE, structure and weight information of a first AI model to which a first data type is applicable; and
receiving, from the UE, structure and weight information of a second AI model to which a second data type is applicable.

7. The method of claim 1, wherein the receiving of the first information from the UE comprises receiving, from the UE, a request to change a previously configured data type.

8. A base station in a wireless communication system, the base station comprising:
a transceiver; and
a processor connected to the transceiver,
wherein the processor is configured to perform:
an operation of receiving, from a user equipment (UE), first information comprising a data type processable by the UE;
an operation of determining a data type, based on the first information and a communication condition; and
an operation of transmitting, to the UE, second information comprising the determined data type,
wherein the second information comprises one of an integer type and a real number type, the integer type and the real number type being classified based on a number of bits for expressing data, and
wherein the communication condition is related to at least one of data throughput, latency, and accuracy.

9. The base station of claim 8, wherein the processor is configured to further perform an operation of receiving, from the UE, data output from an AI model of the UE, and
wherein the second information comprises a data type applied to the AI model of the UE and a type of the data output from the AI model of the UE.

10. The base station of claim 8, wherein the processor is configured to further perform:
an operation of receiving, from the UE, a test result of an output value of an Al model, based on the second information;
an operation of determining whether to use the determined data type, based on the test result; and
an operation of transmitting, to the UE, information indicating whether to use the determined data type.

11. The base station of claim 8, wherein the processor is configured to further perform an operation of transmitting, to the UE, structure and weight information of an AI model to which the determined data type is applicable.

12. The base station of claim 8, wherein the processor is configured to further perform:
an operation of transmitting, to the UE a request for information about an AI model to which the determined data type is applicable; and
an operation of receiving, from the UE, structure and weight information of the AI model to which the determined data type is applicable.

13. The base station of claim 8, wherein the processor is configured to further perform:
an operation of transmitting, to the UE, structure and weight information of a first AI model to which a first data type is applicable; and
an operation of receiving, from the UE, structure and weight information of a second AI model to which a second data type is applicable.

14. A method performed by a user equipment (UE) in a wireless communication system, the method comprising:
transmitting, to a base station, first information comprising a data type processable by the UE;
receiving second information indicating a data type determined based on the first information and a communication condition;
generating an output value of an AI model, based on the determined data type; and
transmitting the generated output value to the base station,
wherein the second information comprises one of an integer type and a real number type, the integer type and the real number type being classified based on a number of bits for expressing data, and
wherein the communication condition is related to at least one of data throughput, latency, and accuracy.

15. A user equipment (UE) in a wireless communication system, the UE comprising:
a transceiver; and
a processor connected to the transceiver,
wherein the processor is configured to:
transmit first information comprising a data type processable by the UE;
receive second information indicating a data type determined based on the first information and a communication condition;
generate an output value of an AI model, based on the determined data type; and
transmit the generated output value to the base station,
wherein the second information comprises one of an integer type and a real number type, the integer type and the real number type being classified based on a number of bits for expressing data, and
wherein the communication condition is related to at least one of data throughput, latency, and accuracy.
